(19) Europäisches Patentamt
European Patent Office
Office européen des brevets

(11) EP 2 362 248 A2

(12) EUROPEAN PATENT APPLICATION

(43) Date of publication:
**31.08.2011 Bulletin 2011/35**

(21) Application number: **11152372.6**

(22) Date of filing: **27.01.2011**

(51) Int Cl.:
***G02B 5/20*** ^(2006.01)
***G02B 5/26*** ^(2006.01)
***G02B 5/08*** ^(2006.01)
***C03C 17/36*** ^(2006.01)
***C03C 17/34*** ^(2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.01.2010 JP 2010016025**

(71) Applicant: **Fujifilm Corporation**
**Minato-ku**
**Tokyo 106-0031 (JP)**

(72) Inventor: **Watanabe, Hidetoshi**
**Kanagawa 258-8577 (JP)**

(74) Representative: **HOFFMANN EITLE**
**Patent- und Rechtsanwälte**
**Arabellastraße 4**
**81925 München (DE)**

# (54) Infrared light reflecting plate, laminated interlayer film sheet for laminated glass and its production method, and laminated glass

(57) Disclosed is an infrared light reflecting plate for reflecting infrared light, which comprises a substrate and at least four light-reflective layers X1, X2, X3 and X4 each of which is formed of a fixed cholesteric liquid-crystal phase. The reflection center wavelength of the light-reflective layers X1 and X2 is the same and is $\lambda_1$ (nm), the two layers reflect circularly-polarized light in opposite directions, and the reflection center wavelength $\lambda_1$ (nm) falls within a range of from 1010 to 1070 nm, and the reflection center wavelength of the light-reflective layers X3 and X4 is the same and is $\lambda_2$ (nm), the two layers reflect circularly-polarized light in opposite directions, and the reflection center wavelength $\lambda_2$ (nm) falls within a range of from 1190 to 1290 nm.

FIG. 1

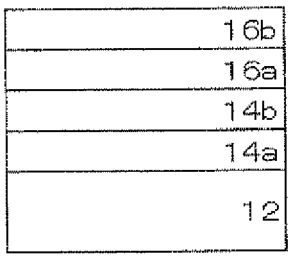


EP 2 362 248 A2

## Description

BACKGROUND OF THE INVENTION

FIELD OF THE INVENTION

The present invention relates to an infrared light reflecting plate having a plurality of light-reflective layers each with a cholesteric liquid-crystal layer fixed therein, and relates to an infrared light reflecting plate mainly for use for heat shield for windows of building structures, vehicles, etc. The invention also relates to a laminated interlayer film sheet for infrared-reflecting laminated glass using the reflector, and to a method for producing it. The invention also relates to infrared-reflecting laminated glass using the reflector.

BACKGROUND ART

With the recent increase in interest in environment and energy-related issues, the needs for energy-saving industrial products are increasing; and as one of them, glass and film are desired that are effective for heat shield for windowpanes for houses, automobiles, etc., or that is, effective for reducing heat load due to sunlight. For reducing heat load due to sunlight, it is necessary to prevent transmission of sunlight rays falling within any of the visible range or the infrared range of the sunlight spectrum.

Laminated glass coated with a special metallic film capable of blocking out thermal radiations, which is referred to as Low-E pair glass, is often used as eco-glass having high heat-insulatinglheat-shielding capability. The special metallic film may be formed by lamination of plural layers, for example, according to a vacuum-deposition method disclosed in JP-A 6-263486. The special metallic film formed through vacuum deposition is extremely excellent in reflectivity, but the vacuum process is nonproductive and its production cost is high. In addition, when the metallic film is used, it also blocks electromagnetic waves; and therefore in use in mobile telephones and the like, the metallic film may causes radio disturbance; or when used in automobiles, there may occur a problem in that ETC (electronic toll collection) could not be used.

JP-A 2002-131531 proposes a heat-reflecting transparent substrate having a metallic fine particles-containing layer. The metallic fine particles-containing film is excellent in visible light transmittance but has a low reflectivity to light failing within a wavelength range of from 700 to 1200 nm that significantly participates in heat shielding, and therefore has a problem in that its heat-shielding capability could not be enhanced.

JP-A 6-194517 discloses a heat-shielding sheet that has an infrared-absorbing dye-containing layer. Use of an infrared-absorbing dye may lower sunlight transmittance but is problematic in that the film surface temperature rises through sunlight absorption and the heat-shielding capability of the film lowers through re-release of the heat.

Japanese Patent 4109914 discloses a laminated optical film having a retardation film with predetermined characteristics and a reflective circularly-polarizing plate and having infrared reflectivity, and this discloses an example of using a cholesteric liquid-crystal phase as the retardation film.

JP-T 2009-514022 discloses an infrared light reflecting article comprising a visible light transparent substrate and an infrared light reflecting cholesteric liquid-crystal layer disposed on the substrate.

Japanese Patent 3500127 discloses a polarizing element having plural cholesteric liquid-crystal layers-, however, the laminate formed through lamination of cholesteric liquid-crystal layers is used mainly for efficiently reflecting visible-range light.

Japanese Patent 3745221 discloses a circularly-polarized-light-extracting optical element formed through lamination of plural liquid-crystal layers in which the liquid-crystal molecules have substantially the same helical axis direction and have the same rotation direction.

In fact, it is difficult to completely reflect a light having a specific wavelength by using a light-reflective film having a light-reflective layer formed of fixed cholesteric liquid-crystal; and in general, a specific retarder, a λ/2 plate, is used. For example, in Japanese Patent 4109914 and JP-T 2009-514022, a light-reflective layer formed of fixed cholesteric liquid-crystal phase is formed on both sides of a λ/2 plate and tried for reflection of a right circularly-polarized light and a left circularly-polarized light having a predetermined wavelength, in which the two light-reflective layers have optical rotation in the same direction and have the same helical pitch.

However, as described above, a λ/2 plate is a special retarder, and its production is difficult and its production cost is high. In addition, the material for the plate is limited to a special one, and the use of the plate may be thereby limited. Further, in general, a λ/2 plate could act as a λ/2 plate to the light coming in the plate surface in the normal direction thereto; however, strictly, it could not function as a λ/2 plate to the light coming therein in oblique directions. Accordingly, the constitution containing a combination of λ/2 plates involves a problem in that it could not completely reflect the light coming therein in oblique directions.

On the other hand, heretofore, various types of laminated glass produced by sticking at least two sheets of

glass with an interlayer film put therebetween so that, when it is broken, the glass pieces may not scatter everywhere, have been proposed for automobile parts, etc. As the material of the interlayer film, used is polyvinyl butyral. Before its practical use, the laminated glass having the constitution as above is previously tested in a light-proofness test, in which the glass is exposed to ultraviolet light for a long period of time and checked for degradation.

Regarding the cholesteric liquid-crystal phase, not only use thereof as a light-reflective layer but also use thereof as various types of functional layers such as a layer that changes its light depending on the electric field applied thereto or the like has been proposed; and incorporating a cholesteric liquid-crystal layer into laminated glass has been tried (for example, Example 1 in JP-A 2008-304762). However, when the laminated glass having a cholesteric liquid-crystal layer inside it is tested in a light-resistant test, it produces air bubbles and therefore requires some improvement for practical use thereof.

SUMMARY OF THE INTENTION

Accordingly, an object of the invention is to improve the reflectivity characteristic of an infrared light reflecting plate that has a plurality of iight-refifective layers each formed of fixed cholesteric liquid-crystal, without indispensable use of a λ/2 plate therein, and to improve the selective reflectivity characteristic of the infrared light reflecting plate that has a plurality of light-reflective layers each formed of fixed cholesteric liquid-crystal, thereby providing an infrared light reflecting plate especially having a high heat-shielding capability,

To solve the above-mentioned problems, the present inventors have assiduously studied and, as a result, have found that, when at least two pairs of light-refiective layers each formed of fixed cholesteric liquid-crystal phase having an opposite optical rotation to each other (that is, having a right optical rotation or a left optical rotation) are disposed on a substrate, then the laminate may reflect any of the left circularly-polarized light and the right circularly-polarized light falling within a predetermined wavelength range, and further, when the selective reflection center wavelength of each pair is adjusted to fall within a predetermined range, then the laminate may secure a higher heat-shielding capability. Based on these findings, the inventors have made the present invention. In the invention, the two pairs of light-reflective layers each formed of fixed cholesteric linquid-crystal having an opposite optical rotation to each other (that is, having a right optical rotation or a left optical rotation) are not always required to be neighbor to each other and are also not always required to be formed on the surface of one and the same substrate.

The means for achieving the above-mentioned objects are as follows.

[1] An infrared light reflecting plate for reflecting infrared light, which comprises a substrate and at least four light-reflective layers X1, X2, X3 and X4 each of which is formed of a fixed cholesteric liquid-crystal phase;
wherein the reflection center wavelength of the light-reflective layers X1 and X2 is the same and is $\lambda_1$ (nm), the two layers reflect circularly-polarized light in opposite directions, and the reflection center wavelength $\lambda_1$ (nm) falls within a range of from 1010 to 1070 nm, and
the reflection center wavelength of the light-reflective layers X3 and X4 is the same and is $\lambda_2$ (nm), the two layers reflect circularly-polarized light in opposite directions, and the reflection center wavelength $\lambda_2$ (nm) falls within a range of from 1190 to 1290 nm.
[2] The infrared light reflecting plate of [1], wherein at least one light-reflective layer of said at least four light-reflective layers X1, X2, X3 and X4 is a layer formed by fixing a cholesteric liquid-crystal phase of a liquid-crystal composition applied on the surface of the underlying light-reflective layer.
[3] The infrared light reflecting plate of [1] or [2], wherein the substrate is a polymer film.
[4] The infrared light reflecting plate of any one of [1]-[3], comprising an easy-adhesion layer on one or both surfaces thereof.
[5] The infrared light reflecting plate of any one of [1]-[4], further comprising an easy-adhesion layer, wherein said at least four light-reflective layers X1, X2, X3 and X4 are disposed on one surface of the substrate, and the easy-adhesion layer is disposed on other surface.
[6] The infrared light reflecting plate of any one of [1]-[5], further comprising a undercoat layer and/or an alignment layer between the substrate and at least one light-reflective layer of said at least four light-reflective layers X1, X2, X3 and X4.
[7] The infrared light reflecting plate of any one of [4]-[6], wherein at least one of the easy-adhesion layer, the undercoat layer, the alignment layer and the substrate comprises polyvinyl butyral.
[8] The infrared light reflecting plate of any one of [1]-[7], wherein at least one of said at least four light-reflective layers, the easy-adhesion layer, the undercoat layer, the alignment layer and the substrate comprises at least one ultraviolet absorber.
[9] The infrared light reflecting plate of [8], wherein the layer or the substrate comprising said at least one ultraviolet absorber has an ultraviolet- transmittance of equal to or smaller than 0.1 % at a wavelength of equal to or smaller than 380 nm.

[10] The infrared light reflecting plate of any one of [4]-[9], wherein at least one of the easy-adhesion layer, the undercoat layer, the alignment layer and the substrate comprises at least one colorant.

[11] The infrared light reflecting plate of any one of [1]-[10], wherein at least one of said at least four light-reflective layers, the easy-adhesion layer, the undercoat layer, the alignment layer and the substrate comprises fine particles of metal oxide having an absorption and/or reflection characteristic for a light of from 1400 to 2500 nm.

[12] A laminated interlayer film sheet for glass, comprising an infrared light reflecting plate of any one of [1]-[11] and, on at least one outermost layer thereof, an interlayer film sheet.

[13] The laminated interlayer film sheet for glass of [12], comprising an interlayer film on both two outermost layers of the infrared light reflecting plate.

[14] The laminated interlayer film sheet for glass of [12] or [13], wherein the interlayer film sheet comprises at least one selected from a group consisting of an ultraviolet absorber, a colorant and fine particles of metal oxide having an absorption and/or reflection characteristic for a light of from 1400 to 2500 nm.

[15] A laminated glass comprising two glasses and a laminated interlayer film sheet of any one of [12]-[14] between the two glasses.

[16] The laminated glass of [15], wherein at least one of the two glasses comprises at least one selected from a group consisting of an ultraviolet absorber, a colorant and fine particles of metal oxide having an absorption and/or reflection characteristic for a light of from 1400 to 2500 nm.

[17] A method for producing a laminated interlayer film sheet for laminated glass, which comprises:

a first step of sticking a first interlayer film on one surface of the infrared light reflecting plate of any one of [1]-[11] to give a first laminate, and

a second step of sticking a second interlayer film sheet on the surface of the first laminate on the side opposite to the surface thereof having the first interlayer film overlie thereto.

[18] The method for producing a laminated interlayer film sheet for laminated glass of [17], wherein in the first step, the infrared light reflecting plate and the first interlayer film are stuck together and simultaneously the substrate is peeled away, and in the second step, the second interlayer film is stuck on the surface from which the substrate has been peeled away.

[19] A window member of building structures, using an infrared light reflecting plate of any one of [1]-[11], a laminated interlayer film for glass of any one of [12]-[14] or a laminated glass of [15] or [16].

[20] A window member of vehicles, using an infrared light reflecting plate of any one of [1]-[11], a laminated interlayer film sheet for glass of any one of [12]-[14] or a laminated glass of [15] or [16],

According to the invention, it is possible to improve the reflectivity characteristic of an infrared light reflecting plate that has a plurality of light-reflective layers each formed of fixed cholesteric liquid-crystal, without indispensable use of a λ/2 plate therein, and to improve the selective reflectivity characteristic of the infrared light reflecting pilate that has a plurality of light-reflective layer each formed of fixed cholesteric liquid-crystal, thereby providing an infrared light reflecting plate especially having a high heat-shielding capability,

BRIEF DESCRIPTION OF THE DRAWINGS

FIG. 1 is a cross-sectional view of one example of the infrared light reflecting plate of the invention.

FIG. 2 is a cross-sectional view of one example of the infrared light reflecting plate of the invention.

FIG. 3 is a cross-sectional view of one example of the infrared light reflecting plate of the invention.

FIG. 4 is a cross-sectional view of one example of the laminated interlayer film sheet for laminated glass of the invention.

FIG. 5 is a cross-sectional view of one example of the laminated interlayer film sheet for laminated glass of the invention.

FIG. 6 is a cross-sectional view of one example of the laminated interlayer film sheet for laminated glass of the invention.

FIG. 7 is a cross-sectional view of one example of the laminated interlayer film sheet for laminated glass of the invention.

FIG. 8 is a cross-sectional view of one example of the laminated glass of the invention.

FIG. 9 is a cross-sectional view of one example of the laminated glass of the invention.

FIG. 10 is a graph showing sunlight energy intensity distribution.

In the drawings, the reference numerals and signs have the following meanings.

| | |
|---|---|
| 12 | Substrate |
| 14a | Light-Reflective Layer (light-reflective layer X1) |
| 14b | Light-Reflective Layer (light-reflective layer X2) |
| 16a | Light-Reflective Layer (light-reflective layer X3) |
| 16b | Light-Reflective Layer (light-reflective layer X4) |
| 22 | Easy-Adhesion Layer (or undercoat layer) |
| 24 | Undercoat layer |
| 26 | Alignment Layer |
| 28 | Easy-Adhesion Layer |
| 32, 34 | Interlayer Film |
| 42 44 | Glass Plate |

## DETAILED DESCRIPTION OF THE INVENTION

The invention is described in detail hereinunder. In this description, the numerical range expressed by the wording "a number to another number" means the range that falls between the former number indicating the lowermost limit of the range and the latter number indicating the uppermost limit thereof.

In this description, the refractivity anisotropy $\Delta n$ of a layer formed of a fixed cholesteric liquid-crystal phase is defined as follows:

In this description, the refractivity anisotropy, $\Delta n$, of a layer formed of a fixed cholesteric liquid-crystal phase means the value of $\Delta n$ for a light of a wavelength at which the layer exhibits the selective reflectivity characteristic (concretely, at a wavelength around 1000 nm). Concretely, first, as a sample, a layer of a fixed cholesteric liquid-crystal phase in which the helical axes of the liquid-crystal molecules are aligned uniformly to a layer plane is formed on a substrate (glass, film) subjected to an alignment treatment or having an alignment film thereon. The selective reflection of the layer is determined, and its peak width Hw is measured. Separately, the helical pitch p of the sample is measured. The helical pitch may be measured on the TEM picture of the cross section of the sample. The data are introduced into the following formula, and the refractivity anisotropy $\Delta n$ of the sample is thereby determined.

$$\Delta n = Hw/p$$

In this description, for the wording that "the reflection center wavelength of each layer is the same", needless-to-say, the error generally acceptable in the technical field to which the present invention belongs is naturally taken into consideration. In general, the difference of around $\pm 30$ nm or so will be acceptable for the same reflection center wavelength.

With reference to the drawings attached hereto, embodiments of the infrared light reflecting plate, the laminated film sheet for laminated glass, and the laminated glass of the invention are described below.

The infrared light reflecting plate shown in FIG. 1 has, on one surface of the substrate 12, light-reflective layers 14a, 14b, 16a and 16b each formed of a fixed cholesteric liquid-crystal phase. However, in the invention, the lamination sequence of the light-reflective layers 14a, 14b, 16a and 16b from the substrate 12 is not limited to that shown in FIG. 1. The four light-reflective layers are not required to be laminated on one surface of the substrate, but in a different embodiment, one or more light-reflective layers may be formed on both surfaces of the substrate.

The substrate 12 is, for example, a polymer film, and its optical properties are not specifically defined. In the invention, in particular, a member of which in-plane retardation Re fluctuates may be used as the substrate. In this point, the invention is differentiated from existing techniques where a $\lambda/12$ plate is used as the substrate and where its optical properties are willingly utilized for improving the light-reflective characteristic of the reflector. However, the invention does not hinder the use of a retarder having an accurately-regulated retardation such as $\lambda/2$ plate or the like, as the substrate 12.

Concretely, not specifically defined in point of the optical properties thereof, the substrate 12 may be a retarder having retardation or may also be an optically-isotropic substrate. In other words, the substrate 12 is not required to be a retarder such as a $\lambda/2$ plate or the like of which the optical properties are strictly controlled. In the invention, the substrate 12 may be formed of a polymer film or the like of which the fluctuation of in-plane retardation at a wavelength of 1000 nm, Re(1000) is 20 nm or more. Furthermore, in the invention, the substrate 12 may be formed of a polymer film or the like of which the fluctuation of in-plane retardation at a wavelength of 1000 nm, Re(1000) is 100 nm or more. In-plane retardation of the substrate is not also specifically defined. For example, a retarder or the like of which in-plane

retardation at a wavelength of 1000 nm, Re(1000) is from 800 to 1300 nm may be used. Examples of the polymer film usable for the substrate are described later.

The light-reflective layers 14a, 14b, 16a and 16b are layers each formed of a fixed cholesteric liquid-crystal phase, and therefore, they exhibit selective light reflectivity of reflecting a light having a specific wavelength based on the helical pitch of the cholesteric liquid-crystal phase in each layer. In one embodiment of the invention, the helical directions of the respective cholesteric liquid-crystal phases in the neighboring light-reflective layers 14a and 14b are opposite to each other, but the reflection center wavelength $\lambda_{14}$ of the two layers is the same. Similarly, the helical directions of the respective cholesteric liquid-crystal phases in the neighboring light-reflective layers 16a and 16b are opposite to each other, but the reflection center wavelength $\lambda_{16}$ of the two layers is the same. In this embodiment, $\lambda_{14} \neq \lambda_{16}$, and therefore, the light-reflective layers 14a and 14b selectively reflect the left circularly-polarized light and the right circularly-polarized light at a predetermined wavelength $\lambda_{14}$, and the light-reflective layers 16a and 16b selectively reflect the left circularly-polarized light and the right circularly-polarized light at a wavelength $\lambda_{16}$ that differs from the wavelength $\lambda_{14}$, and as a whole, the reflector of this embodiment secures broadband reflection characteristics.

In the infrared light reflecting plate 10 shown in FIG. 1, the selective reflection center wavelength $\lambda_{14}$ of the light-reflective layers 14a and 14b falls within a range of from 1010 to 1070 nm; and the selective reflection center wavelength $\lambda_{16}$ of the light-reflective layers 16a and 16b falls within a range of from 1190 to 1290 nm. The invention uses two pairs of light-reflective layers for which the selective reflection wavelength individually falls within the above-mentioned range, and therefore the infrared reflection efficiency of the reflector is thereby improved. As a result, as compared with the infrared light reflecting plate having the same constitution, the reflector of the invention is more improved in point of the heat-shielding capability thereof. As shown in FIG. 10, the sunlight energy intensity spectrum distribution exhibits a general tendency in that the energy is higher at a shorter wavelength; however, the infrared wavelength range spectrum distribution has two energy intensity peaks within a wavelength range of from 950 to 1130 nm and within a wavelength range of from 1130 to 1350. The present inventors' assiduous studies have confirmed that use of a combination of at least one pair of light-reflective layers of which the selective reflection center wavelength falls within a range of from 1010 to 1070 nm (more preferably from 1020 to 1060 nm) and at least one pair of iight-reflective layers of which the selective reflection center wavelength falls within a range of from 1190 to 1290 nm (more preferably from 1200 to 1280 nm) enables more efficient reflection of light corresponding to the two peaks and, as a result, the combination secures more advanced improvement of heat-shielding capability of the laminate of the layers.

The helical pitch of the cholesteric liquid-crystal layer showing the above-mentioned reflection center wavelength is, in general, from 650 to 690 nm or so at a wavelength of $\lambda_{14}$, and from 760 nm to 840 nm or so at a wavelength of $\lambda_{16}$. The thickness of each light-reflective layer may be from 1 to 8 micro meters or so (preferably from 3 to 7 micro meters or so). However, the invention is not limited to the range. By selecting and controlling the type and the concentration of the material (mainly liquid-crystal material and chiral agent) for use in forming the layers, the light-reflective laxer having a desired helical pitch can be formed. The thickness of the layer may be controlled to fall within the desired range, by controlling the coating amount.

As described above, in the neighboring light-refiective layers 14a and 14b, the helical directions of the respective cholesteric liquid-crystal phases are opposite to each other; and similarly, in the neighboring light-reflective layers 16a and 16b, the helical directions of the respective cholesteric liquid-crystal phases are opposite to each other. In that manner, arranging light-reflective layers near to each other, in which the cholesteric liquid-crystal phases are aligned in opposite directions and of which the selective reflections center wavelength are the same, enables reflection of both left circularly-polarized light and right circularly-polarized light at the same wavelength. This effect has no relation with the optical properties of the substrate 12, and is attained not affected by the optical properties of the substrate 12.

For example, in case where the light having passed through the light-reflective layer 16b (that reflects the right circularly-polarized light having a wavelength of $\lambda_{16}$ is reflected but transmits the left circularly-polarized light having the same wavelength) next passes not through 16b but through 14a or 14b of which the selective reflection center wavelength is not $\lambda_{16}$, then the left circularly-polarized light component at the wavelength $\lambda_{16}$ is to pass through the cholesteric liquid-crystal layer having a different helical pitch size. In this case, the left circularly-polarized light at the wavelength $\lambda_{16}$ is affected though slightly by the optical rotation of the cholesteric liquid-crystal phase in the other light-reflective layers, thereby bringing about a change that the wavelength of the left circularly-polarized light component may be shifted. Naturally, this phenomenon is not limited to only the "left circularly-polarized light component at the wavelength $\lambda_{16}$", but is a change that occurs when a circularly-polarized light at a certain wavelength passes through a cholesteric liquid-crystal phase having a different helical pitch. Though based on experimental data, the present inventors' assiduous studies have revealed that, when one circularly-polarized light component not reflected by a cholesteric liquid-crystal layer having a predetermined helical pitch passes, while kept not reflected, through another cholesteric liquid-crystal layer having a different helical pitch, and when the number of the layers through which the light passes is 3 or more, then the negative influence on the circularly-polarized light component passing through the layers becomes remarkable, and after that, even when the circularly-polarized light could reach a cholesteric liquid-crystal layer capable of reflecting the light, the light reflectivity of the layer remarkably lowers. In the invention, even when one pair of light-reflective layers

of which the selective reflection center wavelength is the same but which differ in the helical direction are not arranged to be neighbor to each other, the effect of the invention can be attained; however, the number of the other light-reflective layers (light-reflective layers as formed by individually fixing a cholesteric liquid-crystal layer that differs in the helical pitch and has a different selective reflection center wavelength) to be arranged between the pair of light-reflective layers is preferably at most 2. Needless-to-say, preferably, the pair of light-reflective layers are directly neighbor to each other.

The light-reflective layers may be formed in various methods. One example is a coating method to be described below. More concretely, a curable liquid crystal composition capable of forming a cholesteric liquid-crystal layer is applied onto the surface of a substrate, an alignment layer or a light-reflective layer or the like to form a cholesteric liquid-crystal phase of the composition, and then this is cured (for example, through polymerization, crosslinking reaction or the like) to form the intended light-reflective layer.

FIG. 2 shows a cross-sectional view of another embodiment of the infrared light reflecting plate of the invention. The infrared light reflecting plate 10' shown in FIG. 2 has light-reflective layers 14a and 14b as formed on one surface of the substrate 12, and light-reflective layers 16a and 16b as formed on the other surface thereof. As in this, light-reflective layers may be laminated on both surfaces of the substrate 12. Preferably, however, the combination of light-reflective layers having the same reflection center wavelength is on the same surface side of the substrate 12.

The embodiment of the cholesteric liquid-crystal layers constituting the infrared light reflecting plate of the invention is not limited to those of FIG. 1 and FIG. 2. In other embodiments, five or more light-reflective layers may be laminated on one surface of the substrate, or one or more pairs of light-reflective layers may be formed on both surfaces of the substrate (therefore at least 5 layers in total). In still another embodiment, two or more pairs of light-reflective layers each having the same reflection center wavelength may be formed on one substrate.

Needless-to-say, the infrared light reflecting plate of the invention may be combined with any other infrared light reflecting plate for the purpose of further broadening the reflection wavelength range. In addition, the reflector may have a light-reflective layer capable of reflecting a light having a predetermined wavelength on the basis of any other principle than the selective reflectivity characteristic of cholesteric liquid-crystal phase. Regarding the members capable of being combined with the reflector of the invention, there may be mentioned composite films and the layers constituting the films described in JP-T 4-504555, as well as multilayer laminates described in JP-T 2008-545556, etc.

Needless-to-say, the infrared light reflecting plate of the invention may have any other selective reflectivity characteristic for other infrared wavelength regions (for example, from 780 to 940 nm, from 1400 to 2500 nm) than the above-mentioned two spectral peaks. For example, one additional pair of light-reflective layers each formed of a fixed cholesteric liquid-crystal phase, especially those formed of a fixed cholesteric liquid-crystal phase having a different optical rotation (that is, having right or left optical rotation) may be further laminated to thereby more broaden the selective reflection wavelength range and to more enhance the heat-shielding capability of the reflector.

Not only based on the reflectivity characteristic but also the light-absorbing characteristic of the material thereof, the heat-shielding effect of the reflector may be improved.

For example, a colorant having an absorption characteristic in a near-infrared region, preferably in a wavelength range of from 780 to 940 nm or so may be added to the substrate or to at least one light-reflective layer, or a layer containing the colorant may be additionally disposed in the reflector, thereby absorbing the light in a near-infrared region to further improve the heat-shielding capability of the reflector. When a colorant of a light-absorbing material is used, the transmittance spectrum of the reflector in a visible wavelength region may undergo deviation and the transmitted light may be thereby colored, in some use, this characteristic may be willingly utilized and a colorant to be added may be so selected as to produce a desired color. On the other hand, in some other use (for example, for windshields for automobiles, etc.), the coloration may be unfavorable. The present inventors' investigations have revealed that, when a compound having a desired spectral curve is selected as the colorant or when an absorber material having an absorption maximum wavelength of from 780 to 940 nm is used as combined with a different absorber material having any other absorption characteristic, then the transmitted light from the reflector can be controlled to be neutral. Its details are described later.

Some types of fine particles of metal oxide may have an absorptive characteristic and/or a reflective characteristic in an infrared range, concretely in a wavelength range of from 1400 nm to 2500 nm. In the invention, also usable are the fine particles of metal oxide having that property; and for example, the fine particles of metal oxide may be added to the substrate or to at least one light-reflective layer, or a layer containing the fine particles of metal oxide may be additionally disposed in the reflector, by which the light falling within a wavelength range of from 1400 to 2500 nm or so may be absorbed and/or reflected and the heat-shielding capability of the reflector may be further improved.

The embodiment where a colorant and/or fine particles of metal oxide are used in the manner as above to thereby improve the heat-shielding capability of the reflector is more preferred to the other embodiment where the number of the light-reflective layers each formed of a fixed cholesteric liquid-crystal phase is increased to broaden the reflection wavelength range of the reflector in terms of the Production aptitude and the production cost.

The present inventors' investigations have revealed that the light-reflective layers each formed of a fixed cholesteric liquid-crystal phase tend to be degraded through irradiation with ultraviolet light, especially through irradiation

with ultraviolet light having a wavelength of equal to or shorter than 380 nm. Therefore, in the invention, for example, a material capable of absorbing the light falling within the wavelength range (ultraviolet absorber) may be added to a substrate or to at least one light-reflective layer, or a layer containing the material may be additionally disposed in the reflector, whereby the deterioration of the reflector can be noticeably prevented, and this embodiment is preferred.

Colorants, fine particles of metal oxide, ultraviolet absorbers and the like may have some influence on the alignment of liquid crystals, and therefore preferably, the materials are added to the substrate or to the other layers than the light-reflective layers, or when the light-reflective layer is integrated with any other constitutive member, the materials are preferably added to the other member. The materials may be added to the same layer or may individually be added to different layers. The parts (layers, substrate, etc.) to which the additive materials are added will be so determined that the effect by the function of the respective materials can be attained more efficiently. In consideration of the different properties of those materials (influence on haze, solubility, meltability, coatability, meltability), the parts to which the additive materials are added will be so determined that the materials do not cause surface defects or do not noticeably lower the transparency of the parts.

For example, preferably, an ultraviolet absorber is added to the part in which the incident light comes faster prior to coming in the light-reflective layers. Adding an ultraviolet absorber to the part protects the light-reflective layers from being degraded by ultraviolet light.

Preferably, a colorant and fine particles of metal oxide are added to the part in which the incident light comes later after having come in the light-reflective layers.

The infrared light reflecting plate of the invention may further have a non-light-reflective layer containing an organic material and/or an inorganic material. One example of the non-light-reflective layer usable in the invention includes an easy-adhesion layer for facilitating the adhesion of the constitutive layers to the other part (for example, interlayer film, etc.) Preferably, the easy-adhesion layer is disposed as one or both uppermost layers of the reflector. For example, in an embodiment where at least four light-reflective layers are disposed on one surface of the substrate, the easy-adhesion layer may be formed on the outermost light-reflective layer, and/or the easy-adhesion layer may also be formed on the back of the substrate (on which light-reflective layers are not formed). The material for use in forming the easy-adhesion layer may be selected from various materials, depending on the mode of forming the easy-adhesion layer as to whether the layer is formed to be neighbor to the light-reflective layer or to be neighbor to the substrate, or depending on the material of the other part to which the constitutive layers are to be adhered. Other examples of the non-light-reflective layer usable in the invention include an undercoat layer for enhancing the adhesion power between the light-reflective layers of a fixed cholesteric liquid-crystal phase and the substrate, and an alignment layer used in forming light-reflective layers for more accurately defining the alignment direction of the liquid-crystal compound in the layers. Preferably, the undercoat layer and the alignment layer are disposed between at least one light-reflective layer and the substrate. The alignment layer may be disposed between neighboring light-reflective layers.

Some examples of the infrared light rejecting plate having a non-light-reflective layer of the invention are described with reference to the drawings.

FIG. 3 shows a cross-sectional view of one embodiment of the infrared light reflecting plate of the invention. The infrared light reflecting plate shown in FIG. 3 is an embodiment where easy-adhesion layers 22 and 28, an undercoat layer 24 and an alignment layer 26 are added to the infrared light reflecting plate 10 of FIG. 1. Like the infrared light reflecting plate 10, the infrared light reflecting plate shown in FIG. 3 exhibits an excellent heat-shielding effect, and in addition, this is further improved in terms of the handlability and the reflectivity characteristic thereof owing to the functions of the added layers.

FIG. 4 shows a schematic cross-sectional view of one example of a laminated interlayer film sheet for laminated glass, in which interlayer film sheets 32 and 34 are stuck on both surfaces of the infrared light reflecting plate of FIG. 3. The easy-adhesion layers 22 and 28 improve the adhesiveness of the reflector to the interlayer film sheets 32 and 34. The interlayer film sheet of FIG. 4 may be directly incorporated in laminated glass. When a layer of a liquid-crystal material is incorporated in laminated glass via an interlayer film, the adhesiveness between the layer and the interlayer film may be insufficient and bubbles may be formed therebetween with time. In the example shown in FIG. 4, the easy-adhesion layer 28 is disposed between the interlayer film sheet 34 and the light-reflective layer 16b, and therefore as mentioned above, the adhesiveness therebetween is improved and bubbles to form owing to adhesion failure are hardly formed in this example.

In one example of installing the infrared light reflecting plate of FIG. 3 and FIG. 4 in building structures, vehicles or the like, the light-reflective layers 14a, 14b, 16a and 16b are disposed to be on the outdoor side in such a manner that the layers are more exposed to sunlight than the substrate 12. In case where an ultraviolet absorber is added in this example, preferably, the absorber is added to at least one of the easy-adhesion layer 28 and the interlayer film sheet 34 that are to be on the side nearer to sunlight than the light-reflective layers. On the contrary, a colorant and fine particles of metal oxide are, as so mentioned in the above, preferably added to at least one of the alignment layer 26, the undercoat layer 24, the substrate 12, the easy-adhesion layer 22 and the interlayer film 32 that are to be on the side remoter from sunlight than the light-reflective layers.

Contrary to that in FIG. 4 but need less-to-say, the substrate 12 of the infrared light reflecting plate may be disposed to be on the outdoor side in such a manner that the substrate is more exposed to sunlight than the light-reflective layers each formed of a cholesteric liquid-crystal phase, as in FIG. 5; and the reflector of the type may be installed in building structures, vehicles, etc. In this example, preferably, an ultraviolet absorber is incorporated in at least one of the easy-adhesion layer 22, the substrate 12, the undercoat layer 24, the alignment layer 26 and the interlayer film 32 that are to be on the side nearer to sunlight than the light-reflective layers. On the contrary, a colorant and fine particles of metal oxide are preferably added to at least one of the easy-adhesion layer 28 and the interlayer film 34 that are to be on the side remoter from sunlight than the light-reflective layers.

The infrared light reflecting plate of the invention may be integrated with any other supporting member such as laminated glass or the like. In this case, along with the light-reflective layers, the substrate may also be integrated with the other supporting member; or the substrate is peeled off, and the light-reflective layers may be integrated with the supporting member.

FIG. 6 is an example of a laminated interlayer film sheet comprising the infrared light reflecting plate of FIG. 3, from which the substrate 12 and the undercoat layer 24 are peeled off. In this, the alignment layer 26 may serve also as an easy-adhesion layer of enhancing the adhesiveness of the reflector to the interlayer film 32.

As in the embodiment of FIG. 6 that is installed to face sunlight, an ultraviolet absorber is preferably incorporated in at least one of the easy-adhesion layer 28 and the interlayer film 34 that are to be on the side nearer to sunlight than the light-reflective layers 14a, 14b, 16a and 16b. On the contrary, a colorant and fine particles of metal oxide are preferably added to any one of the alignment layer 26 and the interlayer film 32 that are to be on the side remoter from sunlight than the light-reflective layers '14a, 14b, 16a and 16b.

As shown in FIG. 7, the reflector may be installed contrary to FIG. 6. In this example where the alignment layer 26 is disposed on the side nearer to sunlight than the light-reflective layers 14a, 14b, 16a and 16b, an ultraviolet absorber is preferably incorporated in at least one of the alignment layer 26 and the interlayer film 32 that are to be on the side nearer to sunlight than the light-reflective layers. On the contrary, a colorant and fine particles of metal oxide are preferably incorporated in at least one of the easy-adhesion layer 28 and the interlayer film 34 that are to be on the side remoter from sunlight than the light-reflective layers 14a, 14b, 16a and 16b.

In the examples of FIG. 6 and FIG. 7, the undercoat layer 24 and the substrate 12 are peeled away from the reflector at the interface between the alignment layer 26 and the undercoat layer 24; but needless-to-say, the parts including the substrate 12 may be peeled away at any other interface. For example, at the interface between the undercoat layer 24 and the substrate 12, the substrate 12 may be peeled away from the reflector. In this case, the undercoat layer 24 shall serve as an easy-adhesion layer of enhancing the adhesiveness of the reflector to the interlayer film sheet.

FIG. 8 and FIG. 9 each show a cross-sectional view of an embodiment of laminated glass of the invention.

FiG. 8 is an example where glass plates 42 and 44 are stuck on both sides of the laminated interlayer film sheet for laminated glass of FIG. 4. In the embodiment where the laminated glass is installed in such a manner that the glass plate 44 is kept nearer to sunlight than the light-reflective layers 14a, 14b, 16a and 16b, as in FIG. 8, an ultraviolet absorber may be added to the glass plate 44. On the contrary, a colorant and fine particles of metal oxide may be incorporated in the glass plate 42 to be on the side remoter from sunlight than the light-reflective layers each formed of a cholesteric liquid-crystal phase.

FIG. 9 is an example where glass plates 42 and 44 are stuck on both sides of the laminated interlayer film sheet for laminated glass of FIG. 7. In the embodiment where the laminated glass is installed in such a manner that the glass plate 44 is kept nearer to sunlight than the light-reflective layers 14a, 14b, 16a and 16b, as in FIG. 9, an ultraviolet absorber may be added to the glass plate 44. On the contrary, a colorant and fine particles of metal oxide may be incorporated in the glass plate 42 to be on the side remoter from sunlight than the light-reflective layers each formed of a cholesteric liquid-crystal phase.

As described above, in some embodiments of the invention, preferably, fine particles of metal oxide, a colorant or an ultraviolet absorber is added to the easy-adhesion layer, the alignment layer, the undercoat layer or the substrate; and the layer to be added with any of them may be decided depending on the position relations thereof with sunlight and with the light-reflective layers formed of a cholesteric liquid-crystal phase. The ultraviolet absorber is preferably added to any layer which is disposed closer to sunlight, compared with the light-reflective layers formed of a cholesteric liquid-crystal phase; on the other hand, fine particles of metal oxide or the colorant is preferably added to any layer which is disposed away from sunlight, compared with the light-reflective layers formed of a cholesteric liquid-crystal phase. Depending on the embodiment, the preferable layer to be added with any of them may be varied; and therefore, adjusting the formulation, the solvent, or the amount of the material appropriately and selecting the best method from various methods may be necessary for adding the material to the layer.

Next, examples of the material and the method for preparing the infrared light reflecting plate of the invention are described in detail.

1. Materials for Light-Reflective Layers

According to the invention, for preparing each of the light-reflective layers, a curable liquid crystal composition is preferably used. One example of the liquid crystal composition contains at least a rod-like liquid crystal, an optically-active compound (chiral agent) and a polymerization initiator. Two or more types of each of the ingredients may be used. For example, polymerizable and non-polymerizable liquid-crystal compounds may be used in combination. Or, low-molecular weight or high-molecular weight liquid-crystal compounds may be used in combination. Furthermore, each of the light-reflective layers may contain at least one additive selected from any additives such as homogenous-alignment promoter, anti-unevenness agent, anti-repelling agent and polymerizable monomer for improving the uniformity of alignment, the coating property or the film strength. If necessary, the liquid crystal composition may contain any polymerization inhibitor, antioxidant, ultraviolet absorber, light-stabilization agent, colorant, fine particles of metal oxide or the like in an amount unless the optical properties thereof are lowered.

(1) Rod-like Liquid Crystal Compound

Examples of the rod-like which can be used in the invention include nematic rod-like liquid crystal compounds. Preferable examples of the nematic rod-like liquid crystal include azomethines, azoxys, cyanobiphenyls, cyanophenyl esters, benzoic acid esters, cyclohexanecarboxylic acid phenyl esters, cyanophenylcyclohexanes, cyano-substituted phenylpyrimidines, alkoxy-substituted phenylpyrimidines, phenyl dioxanes, tolans and alkenylcyclohexyl benzonitriles. In the invention, the liquid crystal compound can be selected from not only low-molecular weight compounds but also high-molecular weight compounds. The rod-like liquid crystal compound to be used in the invention may be polymerizable or not polymerizable. Examples of the rod-like liquid crystal having no polymerizable group are described in many documents such as Y. Goto et. al., Mol. Cryst. Liq. Cryst. 1995, Vol. 260, pp.23-28.

A polymerizable rod-like liquid crystal compound may be prepared by introducing a polymerizable group in rod-liquid crystal compound. Examples of the polymerizable group include an unsaturated polymerizable group, epoxy group, and aziridinyl group; and an unsaturated polymerizable group is preferable; and an ethylene unsaturated polymerizable group is especially preferable. The polymerizable group may be introduced in a rod-like liquid crystal compound according to any method. The number of the polymerizable group in the polymerizable rod-like liquid crystal compound is preferably from 1 to 6 and more preferably from 1 to 3. Examples of the polymerizable rod-like liquid crystal compound include those described in Nlakromol.Chem., vol. 190, p.2255 (1989), Advanced Materials, vol. 5, p.107 (1993), US Patent No. 4683327, US Patent No. 5622648, US Patent No. 5770107, WO95/22586, WO95/244 WO97/00600, WO98/23580, WO98/52905, JPA No. 1-272551, JPA No. 6-16616, JPA No. 7-110469, JPA No. 11-80081 and JPA No. 2001-328973. Plural types of polymerizable rod-like liquid crystal compounds may be used in combination. Using plural types of polymerizable rod-like liquid crystal compounds may contribute to lowering the alignment temperature.

(2) Optically-Active Compound (Chiral Agent)

The liquid crystal composition is preferably capable of forming a cholesteric liquid crystal phase, and preferably contains at least one optically-active compound. However, if the rod-like liquid crystal compound having a chiral carbon in its molecule is used, some of the compositions containing such a rod-like liquid crystal compound may be capable of stably forming a cholesteric liquid crystal phase even if they don't contain any optically-active compound. The optically-active compound may be selected from any known chiral agents such as those used in twisted-nematic (TN) and super-twisted-nematic (STN) modes, which are described, for example, in "Ekisho Debaisu Handobukku (Liquid Crystal Device Handbook)" , Third Chapter, 4-3 Chapter, p. 199, edited by No. 142 Committee of Japan Society for the Promotion of Science, published by the Nikkan Kogyo Shimbun, Ltd., in 1989. Although, generally, an optically-active compound has a chiral carbon in its molecule, axially chiral compounds and planar chiral compound, having no chiral carbon, may be used as a chiral compound in the invention. Examples of the axially chiral compound or the planar chiral compound include binaphthyl, helicene, paracyclophane and derivatives thereof. The optically-active compound (chiral compound) may have at least one polymerizable group. Using a polymerizable optically-active compound along with a polymerizable rod-like compound, it is possible to obtain a polymer having repeating units derived from the optically-active compound and the rod-like liquid crystal compound respectively by carrying out the polymerization thereof. In such an embodiment, the polymerizable group in the optically-active compound is preferably same as that in the rod-like liquid crystal compound. Accordingly, the polymerizable group in the optically-active compound is preferably selected from an unsaturated polymerizable group, epoxy group and aziridinyl group; and an unsaturated polymerizable group is preferable; and an ethylene unsaturated polymerizable group is especially preferable.

The optically-active compound may be selected from liquid crystal compounds.

An amount of the optically-active compound is preferably from 1 to 30 % by mole with respect to an amount of the rod-like liquid crystal compound used along with it. A smaller amount of the optically-active compound is more

preferable since influence thereof on liquid crystallinity may be small. Accordingly, optically-active compounds having a strong helical twisting power are preferable since they may achieve the desired helical pitch by being added in a small amount. Examples of such an optically-active compound having a strong helical twisting power include those described in JPA 2003-287623.

(3) Polymerization Initiator

The liquid crystal composition to be used for preparing each of the light-reflective layers is preferably a polymerizable liquid crystal composition; and on its own, the composition preferably contains at least one polymerization initiator. According to the invention, the polymerization may be carried out under irradiation of ultraviolet light, and the polymerization initiator is preferably selected from photo-polymerization initiators capable of initiating polymerizations by irradiation of ultraviolet light. Examples of the photo-polymerization initiator include $\alpha$-carbonyl compounds (those described in U.S. Patent Nos. 2367661 and 2367670), acyloin ethers (those described in U.S. Patent No. 2448828), $\alpha$-hydrocarbon-substituted aromatic acyloin compounds (those described in U.S. Patent No. 2722512), polynuclear quinone compounds (those described in U.S. Patent Nos. 3046127 and 2951758), combinations of triarylimidazole dimer and *p*-aminophenyl ketone (those described in U.S. Patent No. 3549367), acrydine and phenazine compounds (those described in Japanese Laid-Open Patent Publication "Tokkai" No. S60-105667 and U.S. Patent No. 4239850), and oxadiazole compounds (those described in U.S. Patent No. 4212970).

An amount of the photo-polymerization initiator is preferably from 0.1 to 20 % by mass, more preferably from 1 to 8 % by mass, with respect to the liquid crystal composition (the solid content when the composition is a coating liquid).

(4) Alignment Controlling Agent

Any Alignment controlling agent, which can contribute to stably or promptly forming a cholesteric liquid crystal phase, may be added to the liquid crystal composition. Examples of the alignment controlling agent include fluorine-containing (meth)acrylate series polymers and compounds represented by formula (X1)-(X3). Two or more types selected from these compounds may be used in combination. These compounds may contribute to aligning liquid crystal molecules with a small tilt angle or horizontally at the air-interface alignment, It is to be understood that the term "horizontal alignment" in the specification means that the direction of long axis of a liquid crystalline molecule is parallel to the layer plane, wherein strict parallelness is not always necessary; and means, in this *specification,* that a tilt angle of the mean direction of long axes of liquid crystalline molecules with respect to the horizontal plane is smaller than 20°. The layer in which liquid crystal molecules are horizontally aligned at the air-interface may hardly suffer from alignment defects, and may have a high transparency for a visible light and have a high reflection rate. On the other hand, the layer in which liquid crystal molecules are aligned with a large tilt angle may suffer from the finger-print pattern, and may have a low reflective rate, high haze and diffraction characteristics, because of the misalignment between the helical axis of the cholesteric liquid crystal phase and the normal line of the layer surface.

Examples of the fluorine-containing (meth)acrylate series polymer, which can be used as an alignment controlling agent, include those described in JPA 2007-272185, [0018]-[0043].

The compounds represented by formula (X1)-(X3), which can be used as an alignment controlling agent, will be describe in detail respectively.

(X1)

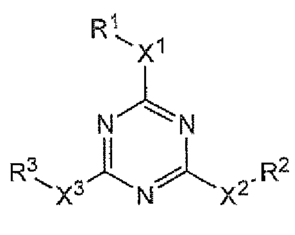

In the formula, $R^1$, $R^2$ and $R^3$ each independently represent a hydrogen atom or a substituent group; $X^1$, $X^2$ and $X^3$ each independently represent a single bond or divalent linking group. The substituent group represented by $R^1$-$R^3$ respectively is preferably a substituted or non-substituted alkyl group (more preferably a non-substituted alkyl or a fluorinated alkyl group), an aryl group (more preferably an aryl group having at least one fluorinated alkyl group), a substituted or non-substituted amino group, an alkoxy group, an alkylthio group, or a halogen atom. The divalent linking group represented by $X^1$, $X^2$ and $X^3$ respectively is preferably selected from the group consisting of an alkylene group,

an alkenylene group, a divalent aryl group, a divalent heterocyclic group, -CO-, -$NR^a$- (where $R^a$ represents a $C_{1-5}$ alkyl group or a hydrogen atom), -O-, -S-, -SO-, -$SO_2$- and any combinations thereof. The divalent linking group is preferably selected from the group consisting of an alkylene group, a phenylene group, -CO-, -$NR^a$-, -O-, -S-, -$SO_2$- and any combinations thereof. The number of carbon atom(s) in the alkylene group is preferably from 1 to 12. The number of carbon atoms in the alkenylene group is preferably from 2 to 12. The number of carbon atoms in the aryl group is preferably from 6 to 10.

(X2)

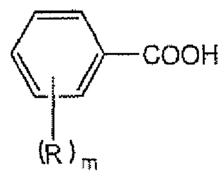

In the formula, R represents a substituent group; and m is an integer of from 0 to 5. When m is equal to or more than 2, two or more R are same or different from each other. Preferable examples of the substituent group represented by R are same as those exemplified above as an example of $R^1$, $R^2$ or $R^3$ in formula (X1). In the formula, m is preferably from 1 to 3, and is especially preferably 2 or 3.

(X3)

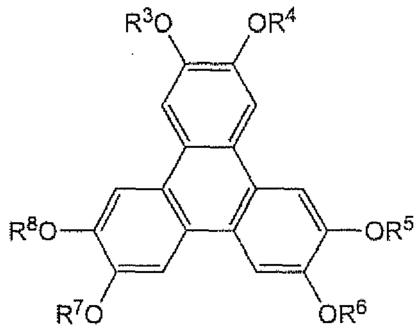

In the formula, $R^4$, $R^5$, $R^6$, $R^7$, $R^8$ and $R^9$ each independently represent a hydrogen atom or a substituent group. Preferable examples of $R^4$, $R^5$, $R^6$, $R^7$, $R^8$ or $R^9$ include those exemplified above as an example of $R^1$, $R^2$ or $R^3$ in formula (X1).

Examples of the compound represented by formula (X1), (X2) or (X3), which can be used as an alignment controlling agent, include the compounds described in JPA 2005-99248.

One compound of formula (X1), (X2) or (X3) may be used alone, or two or more compounds of formula (X1), (X2) or (X3) may be used in combination.

An amount of the compound represented by formula (X1), (X2) or (X3) to be added to the liquid crystal composition is preferably from 0.01 to 10 % by mass, more preferably from 0.01 to 5 % by mass, or especially preferably from 0.02 to 1 by mass, with respect to an amount of the liquid crystal compound.

2. Substrate

The infrared light reflecting plate of the invention has a substrate, and the substrate may not be limited in terms of materials or optical properties as long as it is self-supporting and can support the light-reflective layers. In some applications, the substrate may be required to have a high transmission for a visible slight. The substrate may be selected from specific retardation plates such as a N2 plate, which are produced according to the method controlled for obtaining the specific optical properties; or the substrate may be selected from polymer films of which variation in in-plane retardation is large, more particularly, variation in Re (1000), which is in-plane retardation at a wavelength of 1000nm, is equal to or more than 20nm or 100 nm, which cannot be used as a specific retardation plate. For example, a retarder or the like

of which in-plane retardation at a wavelength of 1000 nm, Re(1000) is from 800 to 1300 nm may be used.

Polymer films having a high transmission for a visible light include those used in display devices such as a liquid crystal display device as an optical film. Preferable examples of the polymer film which can be used as a substrate include poly ester films such as polyethylene terephthalate (PET), polybutylene and polyethylene naphthalate (PEN) films; polycarbonate (PC) films; polymethylmethacrylate films; polyolefin films such as polyethylene and polypropylene films; polyimide films, triacetyl cellulose (TAC) films polyethylene terephthalate films and triacetyl cellulose films are preferable.

3. Easy-Adhesion Layer

The infrared light reflecting plate of the invention may have an easy-adhesion layer as most-outer layer as one side or both sides thereof. The easy-adhesion layer may contribute to improving the adhesiveness with an interlayer film for glass. More specifically, the easy-adhesion layer may contribute to improving the adhesiveness between an interlayer film for glass and the light-reflective layer of the cholesteric liquid crystal phase and/or the substrate thereof. Examples of the material which can be used for preparing the easy-adhesion layer include polyvinyl butyrals (PVB). Polyvinyl butyral is a tyoe of polymer, having a repeating unit shown below, which can be obtained by reacting polyvinyl alcohol with butylaldehyde in a presence of acid catalyst.

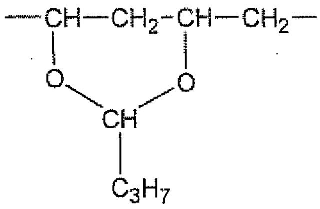

The easy-adhesion layer is preferably prepared by coating. For example, the easy-adhesion layer may be formed on the surface of the cholesteric liquid crystal layer and/or the rear face of the substrate (the face of the substrate having no light-reflective layer thereon) by coating. More specifically, the light-reflective layer may be prepared as follows. A coating liquid is prepared by dissolving at least one polyvinyl butyral in an organic solvent, and is applied to the surface of the cholesteric liquid crystal layer and/or the rear face of the substrate (the face of the substrate having no light-reflective layer thereon), is dried, if necessary, under heat to form an easy-adhesion layer. Examples of the solvent to be used for preparing the coating liquid include methoxy propyl acetate (PGMEA), methylethyl ketone (MEK) and isopropanol (IPA). Any known coating methods may be used. The preferable range of the temperature for drying may vary depending on the types of the materials used for preparing the coating liquid, and, generally, is from about 140 degrees Celsius to about 160 degrees Celsius. The period for drying is not limited, and, general is from about five minutes to ten minutes.

The easy-adhesion layer may be a layer formed of acryl polymers, styrene/acryl polymers, urethane polymers, or the like which may generally be called as an undercoatting layer. As well as the above-mentioned easy-adhesion layer, the easy-adhesion layer formed of such a polymer may be prepared by coating. Some of the commercially-available polymer films have an undercoat layer thereon, and such a commercially-available polymer film may be used as a substrate in the invention. The thickness of the easy-adhesion layer is preferably from 0.1 to 2.0 micro meters.

4. Undercoat Layer

The infrared light reflecting plate of the invention may have an undercoat layer disposed between the light reflective layer of a cholesteric liquid crystal phase and the substrate. When the adhesiveness between the light reflective layer of a cholesteric liquid crystal phase and the substrate is weaker, detachment- defects may more easily occur during carrying out the steps of forming the light reflective layers of a cholesteric liquid crystal phase sequentially; or the strength (impact resistance) of a laminated glass, having the infrared light reflecting plate therein, may become less. Accordingly, any layer contributing to improving the adhesiveness between the cholesteric liquid crystal layer and the substrate may be used as an undercoat layer. On the other hand, in some embodiments, the substrate alone or both of the substrate and the undercoat layer may be removed from the lamination before the lamination of the light reflective layers is stuck on other member such as an interlayer film; and, in such an embodiment, the interface between the substrate and the undercoating or between the undercoating and the light reflective layer formed of a cholesteric liquid crystal phase is required to be weak so that peeling is possible. Considering a laminated interlayer film sheet is made in the latter step, peeling is preferably carried out at the interface between the undercoat layer and the substrate.

Examples of the material which can be used for preparing the undercoat layer include acrylate copolymers, polyvinylidene chloride, styrene-butadiene rubber (SBR), and aqueous polyesters. And in some embodiments, the surface of the undercoat layer is attached to an interlayer film; and in such an embodiment, preferably, the adhesiveness between the undercoat layer and the interlayer film is high, and in terms of the high adhesiveness between them, preferably, the undercoat layer contains polyvinyl butyral along with the above mentioned material. And the undercoat layer is preferably prepared by hardening the materials containing any hardener such as dialdehydes (for example, glutaraldehyde, 2,3-dihydroxy-1,4-dioxane) and boric acid. An amount of the hardener is preferably from 0.2 to 3.0 % by mass with respect to the dry mass of the undercoat layer.
The thickness of the undercoat layer is preferably from 0.05 to 0.5 micro meters.

5. Alignment Layer

The infrared light reflecting plate of the invention may have an alignment layer disposed between the light reflective layer of a cholesteric liquid crystal phase and the substrate. The alignment layer may have a function capable of aligning liquid crystal molecules in the cholesteric liquid crystal layer more precisely. The alignment layer may be prepared by subjecting a film made of an organic compound (preferably a polymer) to a rubbing treatment, obliquely depositing an inorganic compound, forming a layer having microgrooves. Alignment layers having an alignment effect under an electric or magnetic field or irradiation are also known. Among these, alignment layers prepared by subjecting a film of a polymer to a rubbing treatment are preferred.
The alignment layer and the light reflective layer of a cholesteric liquid crystal phase necessarily contact each other, and accordingly, the alignment layer is preferably disposed between the light reflective layer of a cholesteric liquid crystal phase and the substrate or between the light reflective layer of a cholesteric liquid crystal phase and the undercoat layer. The undercoat layer may also function as an alignment layer. The alignment layer may be disposed between the light reflective layers.
The alignment layer preferably has a certain level of adhesiveness for both of the light reflective layer formed of a cholesteric liquid crystal phase, and the undercoat layer or the substrate, which contact to the alignment layer. On the other hand, in some embodiments; describe later, the substrate is removed from the lamination of the light reflective layers for obtaining an laminated interlayer film sheet; and, in such an embodiment, any interface of "the light reflective layer formed of a cholesteric liquid crystal phase"/"the alignment layer"/"the undercoat layer"/"the substrate" is required to be weak so that peeling is possible. Considering a laminated interlayer film sheet is made in the latter step, peeling is preferably carried out at the interface between the undercoat layer and the alignment layer.
Examples of the material which can be used for preparing the alignment layer includes polymers such as polymethylmethacrylate, acrylic acid/methacrylic acid copolymer, styrene/maleimide copolymer, polyvinyl alcohol, modified polyvinyl alcohol, poly(N-methylolacrylamide), styrene/vinyl toluene copolymer, chloridosulfuric polyethylene, cellulose nitrate, polyvinyl chloride, chlorinated polyolefin, polyester, polyimide, vinyl acetate/vinyl chloride copolymer, ethylene/vinyl acetate copolymer, carboxymethyl cellulose, gelatin, polyethylene, polypropylene and polycarbonate; and silane coupling agents. Preferable examples of the polymer are water-soluble polymers such as poly(N-methylolacrylamide), carboxymethyl cellulose, gelatin, polyvinyl alcohol and modified polyvinyl alcohol; gelatin, polyvinyl alcohol and modified polyvinyl alcohol are more preferable; and polyvinyl alcohol and modified polyvinyl alcohol are specially preferable. And in some embodiments, the surface of the alignment layer is attached to an interlayer film; and in such an embodiment, preferably, the adhesiveness between the alignment layer and the interlayer film is high, and in terms of the high adhesiveness between them, preferably, the alignment layer contains polyvinyl butyral along with the above mentioned material.
The thickness of the alignment layer is preferably from 0.1 to 2.0 micro meters.

6. Interlayer Film

On one or both surfaces of the infrared light reflecting plate of the invention, an interlayer film may be stuck. The laminated interlayer film sheet having an interlayer film on one or both surfaces thereof may be easily incorporated into glass as an interlayer film sheet for glass. The substrate may be removed or not removed from the infrared light reflecting plate of the invention when sticking an interlayer film thereon. Considering that a laminated interlayer film sheet is incorporated in a glass in the latter step, the substrate is preferably removed before sticking in terms of thickness, flexibility, and anti-compression.
According to the invention, any interlayer films, which are generally used for preparing laminated glasses, may be used. Examples of the interlayer film include any sheets formed of polyvinyl butyral or ethylene-vinyl acetate copolymer.
The thickness of the interlayer film is generally from 380 to 760 micro meters.

## 7. Laminated Glass

The laminated interlayer film sheet for glass is sandwiched with between two glass plates to form a laminated glass. Any general glass plates may be used.
The thickness of the glass plate is not limited, and the preferable range of the thickness may vary depending on the applications thereof. For examples, in the applications of a front window (windshield) for transport vehicles, generally, the glass plates having the thickness of from 2.0 to 2.3 mm are preferably used; and, in the applications of a heat-shield window member for houses and buildings, generally, the glass plates having the thickness of from 40 to 300 micro meters are preferably used. However, the thickness of the glass plate is not limited to these ranges.

## 8. Ultraviolet Absorber

According to the invention, preferably, at least one of the light-reflective layers, the easy-adhesion layer, the undercoat layer, the alignment layer and the substrate contains at least one ultraviolet absorber. Some kinds of the ultraviolet absorbers may influence the alignment of liquid crystal molecules; and in such a case, it is preferable that the ultraviolet absorber is added to any members (including layers and substrate) other than the light-reflective layers. The ultraviolet absorber is preferably added to the member into which light comes prior to the light reflective layer. However, the invention is not limited to this embodiment. The ultraviolet absorber may be added to the layer disposed between the glass plate, which is disposed outside, and the reflective layer of a cholesteric liquid crystal phase. Or, the ultraviolet absorber may be added to the interlayer film attached to the glass plate which is disposed outside, or the glass plate itself.
Examples of the ultraviolet absorber which can be used in the invention include organic ultraviolet absorbers such as benzotriazole series, benzodithiol series, coumarin series, benzophenone series, salicylate ester series, and cyano acrylate series ultraviolet absorbers; and titanium oxide and zinc oxide. Especially preferable examples of the ultraviolet absorber include "Tinuvin326", "Tinuvin 328" and "Tinuvin479" (all of which are commercially available from Ciba-Geigy Japan Ltd.). The kind and an amount of the ultraviolet absorber may be decided depending on the purpose. Especially, if the member, containing the ultraviolet absorber, can make the ultraviolet- transmittance equal to or smaller than 0. 1 %, degradation of the light reflective layers may be significantly reduced, which is preferable. Therefore, it is preferable that the kind and an amount of the ultraviolet absorber are decided so as to achieve the properties.

## 9. Colorant

According to the invention, preferably, at least one of the light-reflective layers, the easy-adhesion layer, the undercoat layer, the alignment layer and the substrate contains at least one colorant. Some kinds of the colorants may influence the alignment of liquid crystal molecules; and in such a case, it is preferable that the colorant is added to any members (including layers and substrate) other than the light-reflective layers. Some kinds of the member, containing the colorant, make the efficiency of reflecting infrared light of the light reflective layer of a cholesteric liquid crystal phase smaller, and they make the capability of heat-shielding smaller. Therefore, the colorant is preferably added to the member into which light comes after the light reflective layer. However, the invention is not limited to this embodiment. The colorant may be added to the layer disposed between the glass plate, which is disposed inside, and the reflective layer of a cholesteric liquid crystal phase. Or, the colorant may be added to the interlayer film attached to the glass plate which is disposed inside, or the glass plate itself.
Examples of the colorant include dyes and pigments. Especially, any absorbers for the light at a wavelength within the range of from 780 to 940nm are preferable since the heat-shielding capability is more improved. Using such an absorber is preferable also in terms of reducing coloration. Preferable examples of the absorber for the light at a wavelength within the range of from 780 to 940nm include cyan dyes and cyan pigments.
Examples of the cyan dye which can be used in the invention include azomethine dyes such as indoaniline and indophenol dyes; polymethine dyes such as cyanine, oxonol and merocyanine dyes; carbonium dyes such as diphenyl methane, triphenyl methane and xanthene dyes; phthalocyanine dyes; anthraquinone dyes; aryl- or heteryl azo dyes having a coupling ingredient such as phenols, naphthols and anilines; and indigo/thioindigo dyes. These dyes may exhibit cyan only in dissociating a part of the chromophore; and in such a case, the counter cation may be an inorganic cation such as alkali metals and ammonium, an organic cation such as pyridinium and quaternary ammonium salt, or a polymer inorganic or organic cation having the cation as a partial structure. Black dyes such as polyazo dyes may be also used.
Examples of the cyan pigment which can be used in the invention include phthalocyanine pigments; anthraquinone type indanthrone pigments (for example, C. 1. Pigment Blue 60); and dyeing lake pigment type triaryl carbonium pigments. Especially, phthalocyanine pigments are preferable, and examples of the phthalocyanine pigment include copper phthalocyanines such as C. I. Pigment Blue 15:1, C. I. Pigment Blue 15:2, C. I. Pigment Blue 15:3, C. I. Pigment Blue 15:4, C. I. Pigment Blue 15:6; mono-chlorinated or low-chlorinated copper phthalocyanines; aluminum phthalocyanines such as the pigments described in EP Patent No. 860475; non-metal phthalocyanines such as C. I. Pigment Blue 16; and phthalocyanines having Zn, Ni or Ti as a center metal. Among these, C. I. Pigment Blue 15:3, C. I. Pigment Blue 15:4 and aluminum phthalocyanines are more preferable.

As described above, using any light-absorber as a colorant may cause coloration of the transmitted light due to the bias of the transmittance spectrum in the visible light wavelength. Depending on the applications, such coloration may be willingly used, and the colorant may be selected so as to obtain desired colorant. On the other hand, in some applications such as front window (windshield) of vehicles, coloration is not preferable. The inventors conducted various studies, and as a result, found that it is possible to adjust the transmitted light to neutral coloration by using both of one absorber having the absorption peak wavelength of from 780 to 940nm and another absorber having other absorption properties. For example, for adjusting the transmitted light of the infrared light reflecting plate to neutral coloration, using both of the above-mentioned cyan dye and/or cyan pigment and another colorant (such as yellow, dye, yellow pigment, magenta dye, magenta pigment) is preferable. Another colorant may be selected from any known colorants such as dyes described in JPA 2005-105175 and pigments described in JPA 2009-67956.

## 10. Fine particles of Metal Oxide

According to the invention, preferably, at least one of the light-reflective layers, the easy-adhesion layer, the undercoat layer, the alignment layer and the substrate contains fine particles of metal oxide, having absorbing and/or reflecting properties for light having the wavelength of from 1400 to 2500nm. Some kinds of fine particles of metal oxide may influence the alignment of liquid crystal molecules; and in such a case, it is preferable that fine particles of metal oxide are added to any members (including layers and substrate) other than the light-reflective layers. Some kinds of the member, containing the fine particles, make the efficiency of reflecting infrared light of the light reflective layer of a cholesteric liquid crystal phase smaller, and they make the capability of heat-shielding smaller. Therefore, the fine particles are preferably added to the member into which light comes after the light reflective layer. However, the invention is not limited to this embodiment. The fine particles may be added to the layer disposed between the glass plate, which is disposed inside, and the reflective layer of a cholesteric liquid crystal phase. Or, the fine particles may be added to the interlayer film attached to the glass plate which is disposed inside, or the glass plate itself.

Examples of the fine particles of metal oxide includes fine particles containing at least one metal oxide selected from oxides of Zn, Ge, Ti, Zr, Hf, Si, Sn, Mn, Ga, Mo, In, Sb, Ta, V, Y and Nb; and fine particles containing combined metal oxide of at least to metal oxides selected from oxides thereof.

Preferable examples of the metal oxide include ZnO, $GeO_2$, $TiO_2$ $ZrO_2$, $HfO_2$, $SiO_2$ $Sn_2O_3$, $Mn_2O_3$, $Ga_2O_3$, $Mo_2O_3$, $In_2O_3$, $Sb_2O_3$, $Ta_2O_5$, $V_2O_5$, $Y_2O_3$ and $Nb_2O_5$.

Examples of the combined metal oxide includes combined metal oxide of titanium and zirconium, combined metal oxide of titanium, zirconium and hafnium, combined metal oxide of titanium and barium, combined metal oxide of titanium and silicon, combined metal oxide of titanium, zirconium and silicon, combined metal oxide of titanium and tin, and combined metal oxide of titanium, zirconium and tin.

The method for preparing the fine particles of metal oxide is not limited, and the fine particles may be prepared according to any known method. One example is as follows. Metal salt or metal alkoxide is prepared as a raw material, is subjected to hydrolysis in a reaction system containing water to give fine particles of metal oxide.

In another method, inorganic fine particles may be prepared in an organic solvent or in a organic solvent in which thermoplastic resin is dissolved. Examples of the solvent which can be used in the method include acetone, 2-butanone, dichloromethane, chloroform, toluene, ethyl acetate, cyclohexanone, and anisole. These solvents may be used alone respectively or in combination.

## 11. Production Method for Infrared light reflecting plate:

Preferably, the infrared light reflecting plate of the invention is produced according to a coating method. One example of the production method includes at least the following steps:

(1) applying a curable liquid-crystal composition to the surface of a substrate or the like to form a cholesteric liquid-crystal phase thereon, and
(2) irradiating the curable liquid-crystal composition with ultraviolet light for promoting the curing reaction, thereby fixing the cholesteric liquid-crystal phase and then forming a light-reflective layer.

The steps of (1) and (2) are repeated four times on one surface of a substrate to produce the infrared light reflecting plate having the constitution as in FIG. 1. The steps of (1) and (2) are repeated twice on both surfaces of a substrate to produce the infrared light reflecting pilate having the constitution as in FIG. 2.

In the step (1), first, a curable liquid-crystal composition is applied onto the surface of a substrate or an undercoat

layer. The curable liquid-crystal composition is preferably prepared as a coating liquid of the material dissolved and/or dispersed in a solvent. The coating liquid may be applied to the substrate or the like, according to various methods of a wire bar coating method, an extrusion coating method, a direct gravure coating method, a reverse gravure coating method, a die coating method or the like. As the case may be, an inkjet apparatus may be used in which a liquid-crystal composition may be jetted out through a nozzle to form the intended coating film.

Next, the coating film of the curable liquid-crystal composition formed on the surface of the substrate or the like is made to have a cholesteric liquid-crystal phase. In an embodiment where the curable liquid-crystal composition is prepared as a coating liquid that contains a solvent, the coating film may be dried to remove the solvent, thereby the coating film may be made to have the intended cholesteric liquid-crystal phase. If desired, the coating film may be heated up to the transition temperature to the cholesteric liquid-crystal phase. For example, the coating film is once heated up to the temperature of the isotropic phase, and then cooled to the cholesteric liquid-crystal phase transition temperature, whereby the film may stably have the intended cholesteric liquid-crystal phase. The liquid-crystal transition temperature of the curable liquid-crystal composition is preferably within a range of from 10 to 250 degrees Celsius from the viewpoint of the production aptitude, more preferably within a range of from 10 to 150 degrees Celsius. When the temperature is lower than 10 degrees Celsius, the coating film may require a cooling step or the like for cooling it to the temperature range within which the film could exhibit a liquid-crystal phase. On the other hand, when the temperature is higher than 250 degrees Celsius, the coating film may require a higher temperature in order that it could be in an isotropic liquid state at a higher temperature than the temperature range within which the film once exhibits a liquid-crystal phase; and this is disadvantageous from the viewpoint of heat energy dissipation, substrate deformation, degradation, etc.

Next, in the step (2), the coating film in a cholesteric liquid-crystal state is irradiated with ultraviolet light to promote the curing reaction thereof. For ultraviolet irradiation, used is a light source of an ultraviolet lamp or the like. In this step, the ultraviolet irradiation promotes the curing reaction of the liquid-crystal composition, and the cholesteric liquid-crystal phase is thereby fixed and the intended light-reflective layer is thus formed.

The ultraviolet irradiation energy dose is not specifically defined, but in general, it is preferably from 100 $mJ/cm^2$ to 800 $mJ/cm^2$ or so. Not specifically defined, the time for ultraviolet radiation to the coating film may be determined from the viewpoint of both the sufficient strength of the cured film and the producibility thereof.

For promoting the curing reaction, ultraviolet irradiation may be attained under heat. The temperature in ultraviolet irradiation is preferably kept within a temperature range within which the cholesteric liquid-crystal phase can be kept safely as such with no disturbance. The oxygen concentration in the atmosphere participates in the degree of polymerization of the cured film. Accordingly, in case where the cured film could not have the intended degree of polymerization in air and the film strength is therefore insufficient, preferably, the oxygen concentration in the atmosphere is lowered according to a method of nitrogen purging or the like. The preferred oxygen concentration is at most 10%, more preferably at most 7%, most preferably at most 3%. The reaction rate of the curing reaction (for example, polymerization reaction) to be promoted by the ultraviolet irradiation is preferably at least 70% from the viewpoint of keeping the mechanical strength of the layer and for the purpose preventing unreacted matters from flowing out of the layer, more preferably at least 80%, even more preferably at least 90%. For increasing the reaction rate, a method of increasing the ultraviolet irradiation dose or a method of carrying out the polymerization in a nitrogen atmosphere or under a heating condition may be effective. Also employable is a method of keeping the polymerization system, after once polymerized, in a higher temperature condition than the polymerization temperature to thereby further promote the thermal polymerization reaction, or a method of again irradiating the reaction system with ultraviolet light (in this, however, the additional ultraviolet irradiation should be attained under the condition that satisfies the condition of the invention). The reaction rate may be determined by measuring the infrared oscillation spectrum of the reactive group (for example, the polymerizing group) before and after the reaction, followed by comparing the data before and after the reaction.

In the above step, the cholesteric liquid-crystal phase is fixed and the intended light-reflective layer is thereby formed. A most typical and preferred embodiment of the "fixed" liquid-crystal state is such that the alignment of the liquid-crystal compound to form the cholesteric liquid-crystal phase is held as such, to which, however, the invention is not limited. Concretely, the fixed state means that, in a temperature range of generally from 0 to 50 degrees Celsius, or from -30 to 70 degrees Celsius under a severer condition, the layer does not have flowability and does not undergo any alignment morphology change in an external field or by an external force applied thereto, and the layer can continue to stably keep the fixed alignment morphology. In the invention, the alignment state of the cholesteric liquid-crystal phase is fixed through the curing reaction as promoted by ultraviolet irradiation.

In the invention, it is enough that the optical properties of the cholesteric liquid-crystal phase are held in the layer, and finally it is any more unnecessary that the liquid-crystal composition in the light-reflective layer exhibits liquid crystallinity. For example, the liquid-crystal composition may be converted to a high-molecular weight substance and may lose the liquid crystallinity.

12. Production of Laminated interlayer Film Sheet for Laminated Glass:

An interlayer film may be stuck on both sides of the infrared light reflecting plate of the invention to produce a laminated interlayer film sheet for laminated glass in which the reflector is sandwiched between the interlayer film sheets. One example of the production method comprises at least the following steps:

(1) a first step of sticking a first interlayer film sheet on one surface of an infrared light reflecting plate; and
(2) a second step of sticking an interlayer film on the other surface of the infrared light reflecting plate.

The first and second steps may be attained successively or simultaneously. After one step has been attained, the intermediate product may be once stored or conveyed, and then the other step may be thereafter attained.
For sticking the interlayer film, any known sticking method may be employable. Preferred is lamination treatment. In case where the infrared light reflecting plate and the interlayer film are laminated so that they would not peel away from each other after the working treatment, preferably, the two are laminated under some heat and pressure.
For stable lamination, the surface temperature of the reflector to which the interlayer film sheet is stuck is preferably from 50 to 130 degrees Celsius, more preferably from 70 to 100 degrees Celsius.
Preferably, the lamination is attained under pressure. Regarding the condition, the pressure is preferably less than 2.0 kg/cm$^2$, more preferably within a range of from 0.5 to 1.8 kg/cm$^2$, even more preferably within a range of from 0,5 to 1.5 kg/cm$^2$.
In the invention, simultaneously with the lamination, of just after it, or just before it, the substrate (or the laminate containing at least a substrate) may be peeled away from the infrared light reflecting plate. In other words, the laminated interlayer film sheet obtained after the lamination may not have the substrate. For example, one example of the production method for the laminated interlayer film sheet for laminated glass of the invention comprises the following steps:

(1) a first step of sticking a first interlayer film on one surface of an infrared light reflecting plate to give a first laminate; and
(2) a second step of sticking a second interlayer film on the other surface of the first laminate opposite to the surface thereof to which the first interlayer film sheet has been stuck;

in which, in the first step, the first interlayer film is stuck on the infrared light reflecting plate and the substrate is peeled away, and in the second step, the second interlayer film is stuck on the surface from which the substrate has been peeled away.
The method produces a substrateless laminated interlayer film sheet for laminated glass; and using the laminated interlayer film sheet for laminated glass, substrateless infrared-reflectiue laminated glass can be produced with ease. For stably peeling the substrate with neither breakage nor any other trouble, preferably, the temperature of the substrate to be peeled away from the light-reflective layer of a cholesteric liquid-crystal phase is not lower than 40 degrees Celsius, more preferably from 40 to 60 degrees Celsius.

13. Production of Laminated Glass:

The laminated interlayer film sheet for laminated glass of the invention may be sandwiched between two glass plates to give laminated glass.
For the production method, employable is any known laminated glass production method. In general, the laminated interlayer film sheet for laminated glass is sandwiched between two glass plates, and then subjected to heating treatment and pressing treatment (pressing with a rubber roller or the like) repeatedly for a few times, and finally, using an autoclave or the like, this is heated under pressure.

14. Use of Infrared light reflecting plate:

The infrared light reflecting plate of the invention exhibits a selective reflectivity characteristic to a range of from 1010 to 1070 nm and a range of from 1190 to 1290 nm corresponding to the peaks of sunlight energy. The reflector having such a specific characteristic may be stuck on the windows of building structures such as houses, office buildings, etc., or to the windows of vehicles such as automobile, etc., as a sunlight-shielding member. In addition, the infrared light reflecting plate of the invention may be used directly as a sunlight-shielding member by itself (for example, as heat-shielding glass, heat-shielding film).
Other important properties of the infrared light reflecting plate are visible light transmittance and haze. By suitably selecting the material and suitably controlling the production condition and others and depending on the intended end-usage thereof, the invention can provide an infrared light reflecting plate having a preferred visible light transmittance

and a preferred haze. For example, in an embodiment for use that requires a high visible transmittance, the invention can provide an infrared light reflecting plate having a visible light transmittance of at least 90% and having an infrared reflectivity that satisfies the above reaction.

EXAMPLES

Paragraphs below will further specifically describe features of the present invention, referring to Examples and Comparative Examples. Any materials, amount of use, ratio, details of processing, procedures of processing and so forth shown in Examples may appropriately be modified without departing from the spirit of the present invention. Therefore, it is to be understood that the scope of the present invention should not be interpreted in a limited manner based on the specific examples shown below.

[Preparation of Coating Liquid (liquid-crystal composition)]

Coating liquids (R1) and (L1) each having the formulation shown in the following Table were prepared.

Formulation of Coating Liquid (R1 )

| Materials (types) | Name (producer) | Amount |
|---|---|---|
| Rod-like liquid crystal compound | RM-257 (Merck) | 10.000 parts by mass |
| Chiral agent | LC-756 (BASF) | 0.282 parts by mass |
| Polymerization initiator | Irgacure 819 (Ciba Specialty Chemicals) | 0.419 parts by mass |
| Alignment controlling agent | Compound 1 shown below | 0.016 parts by mass |
| Solvent | 2-butanone (Wako) | 15.652 parts by mass |

Formulation of Coating Liquid (L1)

| Materials (types) | Name (producer) | Amount |
|---|---|---|
| Rod-like liquid crystal compound | RM-257 (Merck) | 10.000 parts by mass |
| Chiral agent | Compound 2 shown below | 0.176 parts by mass |
| Polymerization initiator | Irgacure 819 (Ciba Specialty Chemicals) | 0.419 parts by mass |
| Alignment controlling agent | Compound 1 shown below | 0.016 parts by mass |
| Solvent | 2-butanone (Wako) | 15.652 parts by mass |

Alignment controlling agent: Compound 1 (described in JP-A 2005-99248)

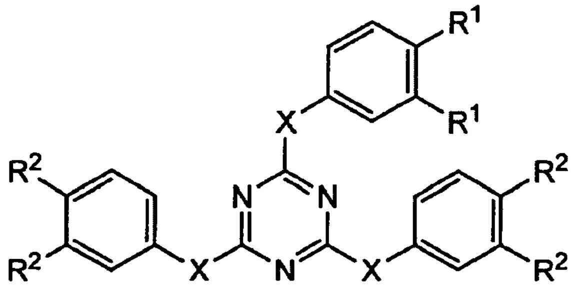

| $R^1$ | $R^2$ | X |
|---|---|---|
| $O(CH_2)_2O(CH_2)_2(CF_2)_6F$ | $O(CH_2)_2O(CH_2)_2(CF_2)_6F$ | NH |

Chiral Agent: Compound 2 (described in JP-A 2002-179668)

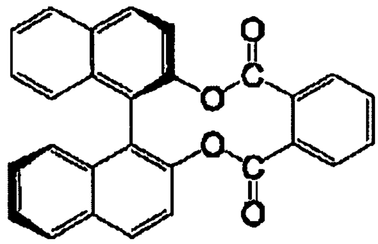

Similarly, the following coating liquids (R2) to (R5) were prepared, for which, however, the amount of the chiral agent LC-756 in the coating liquid (R1) was changed to that shown in the following Table.
Amount of LC-756 used for preparing Coating Liquids R2-R5

| Coating Liquid | Amount of LC-756 |
|---|---|
| Coating Liquid R2 | 0.236 parts by mass |
| Coating Liquid R3 | 0.293 parts by mass |
| Coating Liquid R4 | 0.248 parts by mass |
| Coating Liquid R5 | 0.244 parts by mass |

Similarly, following coating liquids L2-L5 were prepared, for which, however, an amount of the chiral agent, Compound 2 in the coating composition (L1) was changed to that shown in the following Table.
Amount of Compound 2 used for preparing Coating Liquids L2-L5

| Coating Liquid | Amount of Compound 2 |
|---|---|
| Coating Liquid L2 | 0.148 parts by mass |
| Coating Liquid L3 | 0.183 parts by mass |
| Coating Liquid L4 | 0.155 parts by mass |
| Coating Liquid L5 | 0.153 parts by mass |

[Example 1]

Using the prepared coating liquids (R1), (R2), (L1) and (L2), an infrared light reflecting plate was produced according to the process mentioned below. As the substrate, used here was PUJIFShNi's PET film (with no undercoat layer, having a thickness of 188 micro meters).

(1) Using a wire bar, each coating liquid was applied onto the PET film so as to have a dry thickness of 6 micro meters, at room temperature.
(2) This was dried at room temperature for 30 seconds to remove the solvent, and then heated in an atmosphere at 125 degrees Celsius for 2 minutes and thereafter at 95 degrees Celsius to form a cholesteric liquid-crystal phase. Next, using Fusion UV Systems' electrodeless lamp "D Bulb" (90 mW/cm), this was UV-irradiated at a power of 60% for 6 to 12 seconds, whereby the cholesteric liquid-crystal phase was fixed to form a film (light-reflective layer).
(3) After this was cooled to room temperature, the above steps (1) and (2) were repeated, thereby producing an infrared light reflecting plate having four laminated light-reflective layers of a cholesteric liquid-crystal phase.

The coating liquids of (R1), (R2), (L1) and (L2) were applied in that order.

[Example 2]

An infrared light reflecting plate of Example 2 was produced according to the same process as in Example 1, for which, however, the order of the coating liquids in application was changed to (R1), (R2), (L2) and (L1).

[Example 3]

An infrared light reflecting plate of Examples 3 was produced according to the same process as in Example 1, for which, however, the prepared coating liquids (R3), (L3), (R4) and (L4) were used.

[Example 4]

An infrared light reflecting plate of Example 4 was produced according to the same process as in Example 1, for which, however, the prepared coating liquids (R5), (L5), (R6) and (L6) were used.

[Comparative Example 1]

An infrared light reflecting plate of Comparative Example 1 was produced according to the same process as in Examples 1, for which, however, the prepared coating liquids (R7), (L7), (R8) and (L8) were used.

[Comparative Example 2]

An infrared light reflecting plate of Comparative Example 2 was produced according to the same process as in Example 1, for which, however, the prepared coating liquids (R9), (L9), (R10) and (L10) were used.

[Comparative Example 3]

An infrared light reflecting plate of Comparative Example 3 was produced according to the same process as in Example 1, for which, however, the prepared coating liquids (R7), (L7), (R11) and (L11) were used.

[Heat-Shielding Capability Evaluation 1]

Using JASCO's spectrophotometer "V-670", the reflection spectrum of each of the infrared light reflecting plate produced here was measured; and the heat-shielding capability (reflectivity) of each reflector to the sunlight spectrum failing within a range of from 780 to 1400 nm was computed. The heat-shielding capability was evaluated according to the standards mentioned below (higher reflectivity is more preferred).

A: Reflectivity, equal to or more than 30%.
B: Reflectivity, from 25% to less than 30%.
C: Reflectivity, less than 25%.

The results are shown in the following Table.

| Ex.** | Light reflective layer (First Layer) <Substrate Side> | Light reflective layer (Second Layer) | Light reflective layer (Third Layer) | Light reflective layer (Fourth Layer) / <Air-interface side> | Eval.1 *1 |
|---|---|---|---|---|---|
| 1 | Coating Liquid: R1/Reflectivity: Right-Circularly Polarized Light / Center Wavelength of Reflectivity: 1040nm | Coating Liquid: L1/ Reflectivity: Left-Circularly Polarized Light Center Wavelength of Reflectivity: 1040nm | Coating Liquid: R2 / Reflectivity: Right-Circularly Polarized Light / Center Wavelength of Reflectivity: 1240nm | Coating Liquid: L2 Reflectivity: Left-Circularly Polarized Light / Center Wavelength of Reflectivity: 1240nm | 30.8% (A) |

(continued)

| Ex.** | Light reflective layer (First Layer) <Substrate Side> | Light reflective layer (Second Layer) | Light reflective layer (Third Layer) | Light reflective layer (Fourth Layer) / <Air-interface side> | Eval.1 *1 |
|---|---|---|---|---|---|
| 2 | Coating Liquid: R1/Reflectivity: Right-Circularly Polarized Light / Center Wavelength of Reflectivity: 1040nm | Coating Liquid : R2/ Reflectivity: Right-Circularly Polarized Light / Center Wavelength of Reflectivity: 1240nm | Coating Liquid: L2 / Reflectivity: Left-Ciroularly Polarized Light Center Wavelength of Reflectivity: 1240nm | Coating Liquid: L1 / Reflectivity: Left-Circularly Polarized Light / Center Wavelength of Reflectivity:1040nm | 30.1% (A) |
| 3 | Coating Liquid: R3/Reflectivity: Right-Circulariy Polarized Light / Center Wavelength of Reflectivity: 1010nm | Coating Liquid: L3 / Reflectivity: Left-Circularly Polarized Light / Center Wavelength of Reflectivity: 1010nm | Coating Liquid: R4 / Reflectivity: Right-Circularly Polarized Light / Center Wavelength of Reflectivity: 1190nm | Coating Liquid: L4 / ReHectivity: Left-Circularly Polarized Light / Center Wavelength of Reflectivity:1190nm | 30.5% (A) |
| 4 | Coating Liquid: R5 / Reflectivity: Right-Circularly Polarized Light / Center Wavelength of Reflectivity: 1070nm | Coating Liquid: L5 / Reflectivity: Left-Circularly Polarized Light Center Wavelength of Reflectivity: 1 070nm | Coating Liquid: R6 / Reflectivity: Right-Circutahy Polarized Light / Center Wavelength of Reflectivity: 1290nm | Coating Liquid: L6 / Reflectivity: Left-Circularly Polarized Light / Center Wavelength of Reflectivity: 1290nm | 30.2% (A) |
| Comp. Ex. 1 | Coating Liquid: R7 / Reflectivity: Right-Circularly Polarized Light / Center Wavelength of Reflectivity: 1000nm | Coating Liquid: L7 / Reflectivity: Left-Circulady Polarized Light Center Wavelength of Reflectivity: 1000nm | Coating Liquid: R8 / Reflectivity: Right-Circularly Polarized Light / Center Wavelength of Reflectivity: 1180nm | Coating Liquid: L8 / Reflectivity: Left-Circularly Polarized Light / Center Wavelength of Reflectivity:1180nm | 25.7% (B) |
| Comp. Ex. 2 | Coating Liquid: R9 / Reflectivity: Right-Circularly Polarized Light / Center Wavelength of Reflectivity: 1080nm | Coating Liquid: L9 / Reflec6vity: Left-Circularly Polarized Light / Center Wavelength of Reflectivity. 1 080nm | Coating Liquid: R10 Reflectivity, Right-Circularly Polarized Light / Center Wavelength of Reflectivity: 1300nm | Coating Liquid: L10 /Reflectivity: Left-Circuiarly Polarized Light / Center Wavelength of Reflectivity: 1300nm | 25.2% (B) |

(continued)

| Ex.** | Light reflective layer (First Layer) <Substrate Side> | Light reflective layer (Second Layer) | Light reflective layer (Third Layer) | Light reflective layer (Fourth Layer) / <Air-interface side> | Eval.1 *1 |
|---|---|---|---|---|---|
| Comp. Ex. 3 | Coating Liquid: R7 / Reflectivity: Right-Circularly Polarized Light / Center Wavelength of Reflectivity: 1000nm | Coating Liquid: L7 / Reflectivity: Left-Circuiarly Polarized Light / Center Wavelength of Reflectivity: 1000nm | Coating Liquid: R11 / Reflectivity: Right-Circularly Polarized Light / Center Wavelength of Reflectivity: 1200nm | Coating Liquid: L11 / Reflectivity: Lett-Circularly Polarized Light / Center Wavelength of Reflectivity: 1200nm | 27.8% (B) |
| *1 Evaluation 1: Evaluation of Heat-shielding Capability (reflectivity to light of from 700 to 1200 nm)<br>** Ex. = Example | | | | | |

As shown in the above Table, the infrared light reflecting plates of Examples 1 to 4 each comprising both a pair of light-reflective layers having a reflection center wavelength of from 1010 to 1070 nm and a pair of light-reflective layers having a reflection center wavelength of from 1190 to 1290 nm exhibited a high heat-shielding capability. The infrared light reflecting plate of Example 2 in which the layers having the same reflection center wavelength were arranged as spaced from each other was somewhat inferior to the infrared light reflecting plate of Example 1 in point of the reflectivity, but was still good.

The reflectors of Comparative Examples 1 to 3 also exhibited reflectivity to infrared light; however, as compared with those of Examples 1 to 4, their heat-shielding capability was poor. In particular, the heat-shielding capability of the infrared light reflecting plates of Comparative Examples 1 and 2 where the reflection center wavelength of both the two pairs overstepped the above-mentioned wavelength range was lower than that of the reflectors of Examples 3 and 4 where the reflection center wavelength of the two pairs was near to each other falling within the above-mentioned range. The infrared light reflecting plate of Comparative Example 3 where the reflection center wavelength of only one pair fell within the above-mentioned wavelength range (1190 to 1290 nm) exhibited a higher heat-shielding capability than that of the infrared light reflecting plate of Comparative Example 1, but was still lower than that of the infrared light reflecting plates of Examples 1 to 4.

[Preparation of Easy-Adhesion Layer Coating Liquid]

Easy-adhesion layer coating liquids (I1) and (I2) each having the formulation mentioned below were prepared. Formulation of Easy-Adhesion Layer Coating Liquid (I1):

| | |
|---|---|
| Polyvinyl butyral resin B1776 (by Changchun Co., Taiwan) | 10 mas.pts. |
| Methoxypropyl acetate (PGMEA) | 100 mas.pts. |

Formulation of Easy-Adhesion Layer Coating Liquid (I2) (containing an ultraviolet absorber):

| | |
|---|---|
| Polyvinyl butyral resin B1776 (by Changchun Co., Taiwan) | 10 mas.pts. |
| Methoxypropyl acetate (PGMEA) | 100 mas.pts. |
| UV absorber Tinuvin 326 (by Ciba Japan) | 2.5 mas.pts. |
| HALS Tinuvin 152 (by Ciba Japan) | 2.5 mas.pts. |

[Preparation of Undercoat layer Coating Liquid]

Undercoat layer coating liquids (S1) and (S2) each having the formulation mentioned below were prepared. Formulation of Undercoat layer Coating Liquid (S1):

| | |
|---|---|
| Acrylate resin Jurymer ET-410 (by Toa Gosei, having a solid concentration of 30%) | 50 mas.pts. |
| Methanol | 50 mas.pts. |

The undercoat layer coating liquid (S2) having the formulation mentioned below was prepared by mixing ITO fine particles and methanol and ultrasonically dispersing them for 30 minutes to give a dispersion of ITO fine particles having a mean dispersion particle size of 60 nm, follower by mixing the resulting dispersion with an Acrylate resin. Formulation of Undercoat layer Coating Liquid (S2) (containing ITO fine particles):

| | |
|---|---|
| Acrylate resin Jurymer ET-410 (by Toa Gosei, having a solid concentration of 30%) | 45 mas.pts. |
| Methanol | 53.5 mas.pts. |
| ITO fine particles (having a mean particle size of 30 nm) | 1.5 mas.pts. |

[Preparation of Alignment Layer Coating Liquid]

Alignment layer coating liquids (H1), (H2) and (H3) each having the formulation mentioned below were prepared. Formulation of Alignment Layer Coating Liquid (H1):

| | |
|---|---|
| Modified polyvinyl alcohol PVA 203 (by Kuraray) | 10 mas.pts. |
| Glutaraldehyde | 0.5 mas.pts. |
| Water | 371 mas.pts. |
| Methanol | 119 mas.pts. |

Formulation of Alignment Layer Coating Liquid (H2) (containing cyan dye):

| | |
|---|---|
| Modified polyvinyl alcohol PVA 203 (by Kuraray) | 10 mas.pts. |
| Glutaraldehyde | 0.5 mas.pts. |
| Water | 369 mas.pts. |
| Methanol | 119 mas.pts. |
| Cyan dye Direct Blue 79 | 2 mas.pts. |

Formulation of Alignment Layer Coating Liquid (H3) (containing PVB resin):

| | |
|---|---|
| Modified Polyvinyl alcohol PVA 203 (by Kuraray) | 10 mas.pts. |
| Glutaraldehyde | 0.5 mas.pts. |
| Water | 243 mas.pts. |
| Methanol | 243 mas.pts. |
| Cyan dye Direct Blue 79 | 2 mas.pts. |
| Polyvinyl butyral resin B1776 (by Changchun Co., Taiwan) | 2 mas.pts. |

[Preparation of Easy-Adhesion Layer (undercoat layer) Coating Liquid]

An easy-adhesion layer (undercoat layer) coating liquid (U1) having the formulation shown below was prepared. Formulation of Easy-Adhesion Layer (undercoat layer) Coating Liquid (U1):

| | |
|---|---|
| Styrene-acrylic resin Aron S-1001 (by Toa Gosei, having a solid concentration of 50%) | 20 mas.pts. |
| Methoxypropyl acetate (PGMEA) | 80 mas.pts. |

[Example 5]

Using a wire bar, the easy-adhesion layer (undercoat layer) coating liquid (U1) was applied to a PET film (by FUJIFILM, having a thickness of 188 micro meters) so as to have a dry thickness of 0.5 micro meters. Subsequently, this was heated at 150 degrees Celsius for 10 minutes, dried and solidified to form an easy-adhesion layer (undercoat layer).

Next, using a wire bar, the undercoat layer coating liquid (S1) was applied to the other surface of the PET film that had been coated with the easy-adhesion layer (undercoat layer) in the above, opposite to the surface thereof coated

with the easy-adhesion layer (undercoat layer), so as to have a dry thickness of 0.25 micro meters. Subsequently, this was heated at 150 degrees Celsius for 10 minutes, dried and solidified to form an undercoat layer.

Next, using a wire bar, the alignment layer coating liquid (H1) was applied onto the formed undercoat layer so as to have a dry thickness of 1.0 micro meter. Subsequently, this was heated at 100 degrees Celsius for 2 minutes, dried and solidified to form an alignment layer. The alignment layer was rubbed (with a rayon cloth under a pressure of 0.1 kgf at a rotation frequency of 1000 rpm and at a conveyance speed of 10 m/min for one reciprocation).

Next, using the coating liquids (R1), (L1), (R2) and (L2), four laminated cholesteric liquid-crystal phase light-reflective layers were formed on the above-formed alignment layer according to the same process as in Example 1.

Next, using a wire bar, the easy-adhesion layer coating liquid (I1) was applied onto the surface of the uppermost layer of the cholesteric liquid-crystal phase light-reflective layers formed in the above, so as to have a dry thickness f 1.0 micro meter. Subsequently, this was heated at 150 degrees Celsius for 10 minutes, dried and solidified to form an easy-adhesion layer, thereby producing an infrared light reflecting plate.

Next, using a laminator, the above-produced infrared light reflecting plate and a polyvinyl butyral interlayer film sheet for laminated glass (having a thickness of 380 micro meters) were laminated (at a heating temperature of 80 degrees Celsius under a pressure of 1.5 kg/$cm^2$ and at a conveyance speed of 0.1 m/min) to thereby produce a laminated interlayer film sheet for laminated glass.

Next, the above-produced laminated interlayer film sheet for laminated glass was sandwiched between two transparent glass plates (each having a thickness of 2 mm), put into a rubber bag, and degassed with a vacuum pump. Subsequently, this was heated up to 90 degrees Celsius under reduced pressure, kept as such for 30 minutes, and then restored to room temperature under ordinary pressure. Subsequently, this was put in an autoclave and kept under a pressure of 1.3 MPa at a temperature of 130 degrees Celsius for 20 minutes. This was restored to room temperature under ordinary pressure, thereby producing a laminated glass sheet having an infrared light reflective function of Example 5.

[Example 6]

A laminated glass sheet having an infrared light reflective function of Example 6 was produced according to the same process as in Example 5, for which, however, the infrared light reflecting plate produced in Example 1 was used.

[Comparative Example 4]

A laminated glass sheet having an infrared light reflective function of Comparative Example 4 was produced according to the same process as in Example 5, for which, however, the light-reflective layer forming coating liquids (R7), (L7), (R8) and (L8) were used and the light reflective layers of cholesteric liquid-crystal phase were produced according to the same process as in Comparative Example 1.

[Heat-Shielding Capability Evaluation 2]

Using JASCO's spectrophotometer "V-670", the reflection spectrum and the transmission spectrum of each of the infrared light reflective function-having laminated glass sheets produced here were measured; and the heat-shielding capability (transmittance) of each laminated glass sheet to the sunlight spectrum falling within a range of from 300 to 2500 nm was computed. The heat-shielding capability was evaluated according to the standards mentioned below (lower transmittance is more preferred).

AA: Transmittance, equal to or less than 50%.
A: Transmittance, from more than 50% to 65%.
B: Transmittance, from more than 65% to 75%.
C: Transmittance, higher than 75%.

[Light-Resistant Test]

The infrared light reflective function-having laminated glass sheets produced here were tested in a light-resistant test under the condition mentioned below, and the light-resistant thereof was evaluated from the viewpoint of the presence or absence of air bubbles formed therein.

Light-Resistant Test Condition:

Apparatus: Iwasaki Electric's Light-resistant Tester.
Eye-Super UV (metal halide).

BP temperature: 63 degrees Celsius.
Irradiated side: Light-reflective layer side of cholesteric liquid-crystal phase.
Irradiation time: 200 hours.

The results are shown in the following Table.

| | Light reflective layer (First Layer) <Substrate Side> | Light reflective layer (Second Layer) | Light reflective layer (Third Layer) | Light reflective layer (Fourth Layer) <Air-interface side> | Easy-Adhesion Layer | Evaluation 2 *1 | Light-Resistant Test *2 |
|---|---|---|---|---|---|---|---|
| Example 5 | Coating Liquid: R1 | Coating Liquid: L1 | Coating Liquid: R2 | Coating Liquid: L2 | Easy-Adhesion Layer: presence UV absorber: absence | 63.0% (A) | Absence |
| Example 6 | Coating Liquid: R1 | Coating Liquid: L1 | Coating Liquid: R2 | Coating Liquid: L2 | Easy-Adhesion Layer: absence | 66.1% (B) | Presence |
| Comparative Example 4 | Coating Liquid: R7 | Coating Liquid: L1 | Coating Liquid: R8 | Coating Liquid: L8 | Easy-Adhesion Layer: presence UV absorber: absence | 69.2% (B) | Absence |
| *1 Evaluation 2: Evaluation of Heat-shielding Capability (transmittance of light of from 300 to 2500 nm)<br>*2 Light Resistant Test: Evaluation from the viewpoint of the presence or absence of air bubbles | | | | | | | |

As shown in the above, the sample of Example 5 where the laminated glass sheet was produced by using the cholesteric liquid-crystal phase light-reflective layers including both the pair of light-reflective layers having a reflection center wavelength of from 1010 to 1070 nm and the pair of light-reflective layers having a reflection center wavelength of from 1190 to 1290 nm and by arranging the easy-adhesion layer (via the laminated interlayer film sheet) exhibited a good heat-shielding capability, and in addition, in the light-resistant test, the sample did not form air bubbles.
Example 6 used the same cholesteric liquid-crystal phase light-reflective layers as in Example 5; however, this did not use the easy-adhesion layer in producing the laminated glass, the heat-shielding capability of the sample was somewhat lowered. In addition, in the light-resistant test, the sample formed some air bubbles.
The sample of Comparative Example 4 in which the reflection center wavelength of both the two pairs of cholesteric liquid-crystal phase light-reflective layers overstepped the above-mentioned wavelength range and which did not use the easy-adhesion layer was poor in heat shieldability.

[Example 7]

A laminated glass sheet having an infrared light reflective function of Example 7 was produced according to the same process as in Example 5, for which, however, the easy-adhesion layer coating liquid (I1) was changed to the UV absorber-containing easy-adhesion layer coating liquid (I2).

[Example 8]

A laminated glass sheet having an infrared light reflective function of Example 8 was produced according to the same process as in Example 7, for which, however, the alignment laser coating liquids (H1) was changed to the cyan dye-containing alignment layer coating liquid (H2).

[Example 9]

A laminated glass sheet having an infrared light reflective function of Example 9 was produced according to the same process as in Example 8, for which, however, the undercoat layer coating liquid (U1) was changed to the ITO particles-containing undercoat layer coating liquid (U2).

[Examples 10]

A laminated glass sheet having an infrared light reflective function of Example 10 was produced according to the same process as in Example 5, for which, however, the alignment layer coating liquid (H1) was changed to the cyan dye-containing alignment layer coating liquid (H2).

[Example 11]

An infrared light reflecting plate was produced according to the same process as in Example 8, for which, however, the alignment layer coating liquid (H1) was changed to the PVB resin-containing alignment layer coating liquid (H3). In producing a laminated interlayer film sheet for laminated glass by using the infrared light reflecting plate and the polyvinyl butyral interlayer film sheet for laminated glass, the PET film substrate was peeled just before the lamination treatment. The substrate was peeled at the interface between the alignment layer and the undercoat layer, and as a result, there was obtained a laminated interlayer film sheet having a constitution of interlayer film sheet/UV absorber-containing easy-adhesion layer/cholesteric liquid-crystal phase light-reflective layer/PVB resin-containing alignment layer/interlayer film sheet. Using the laminated interlayer film sheet, a laminated glass sheet having an infrared light reflective function of Example 11 was produced according to the same process as in Example 5.

Similarly, the laminated glass sheets having an infrared light reflective function produced in the above were tested for the light shielding capability evaluation 2 and according to the light-resistant test (evaluation of bubble formation). Further, in another light-resistant test, the samples were analyzed for the yellowing degree and evaluated according to the standards mentioned below. Still further, the samples were checked for the color of the transmitted light.

[Light-resistant Test (yellowing evaluation)]

The light-resistant test condition for yellowing was the same as that for bubble formation.
Yellowing Evaluation:

A: No change.
B: Some but slight change after detailed observation.
C: Yellowing found in one glance.
D: Marked yellowing.

[Transmitted Light Evaluation]
The infrared light reflective function-having laminated glass sheets produced here were visually checked under a white fluorescent lamp.

AA: No color change
B: Color change found in detailed observation, but ignorable.
C: Color change found in detailed observation, and problematic.
D: Color change found in one glance.

The results are shown in the following Table. In this, the results of Example 5 are also shown,

| | Easy-Adhesion Layer | Alignment Layer | Undercoat layer | Evaluation 2 *1 | Light Resistant Test | | Transmitted Light Evaluation |
|---|---|---|---|---|---|---|---|
| | | | | | Air bubbles | Yellowing | |
| Example 5 | Easy-Adhesion Layer: presence<br>UV absorber: absence | Alignment layer: presence<br><br>Cyan dye: absence | Undercoat layer: presence<br><br>ITO Fine Particles: absence | 63.0% (A) | Absence | C | AA (colorless) |
| Example 7 | Easy-Adhesion Layer: presence<br>UV absorber: presence | Alignment layer: presence<br><br>Cyan dye: absence | Undercoat layer: presence<br><br>ITO Fine Particles: absence | 60.6% (A) | Absence | A | B (yellow) |
| Example 8 | Easy-Adhesion Layer: presence<br>UV absorber: presence | Alignment layer: presence<br><br>Cyan dye: presence | Undercoat layer: presence<br><br>ITO Fine Particles: absence | 55.4% (A) | Absence | A | A (pale green) |
| Example 9 | Easy-Adhesion Layer: presence<br>UV absorber: presence | Alignment layer: presence<br><br>Cyan dye: presence | Undercoat layer: presence<br><br>ITO Fine Particles: presence | 47.2% (AA) | Absence | A | A (pale green) |
| Example 10 | Easy-Adhesion Layer: presence<br>UV absorber: absence | Alignment layer: presence<br><br>Cyan dye: presence | Undercoat layer: presence<br><br>ITO Fine Particles: presence | 49.6% (AA) | Absence | D | B (blue) |
| Example 11 | Easy-Adhesion Layer: presence<br>UV absorber: presence | Alignment layer: presence<br><br>Cyan dye: presence | Undercoat layer: absence | 54.1 % (A) | Absence | A | A (pale green) |
| *1 Evaluation 2: Evaluation of Heat-shielding Capability (transmittance of light of from 300 to 2500 nm) | | | | | | | |

The sample of Example 5 was confirmed to be on a level of no problem in point of coloration of the transmitted light.

The sample of Example 7 contained an ultraviolet absorber in the easy-adhesion layer thereof, and therefore its heat-shielding capability was improved and in the light-resistant test, the sample was protected from yellowing.

In Example 8, a cyan dye was further added to the Alignment layer, whereby the heat-shield capability of the

sample was further improved. In addition, the cyan dye corrected the color of the sample, and therefore the color shift of the transmitted light was suppressed to relatively pale green on an acceptable level.

In Example 9, ITO fine particles were further added to the undercoat layer, by which the heat-shielding capability of the sample was further improved. The color of the transmitted light was still pale green; however, since the visible light transmittance lowered as a whole, the color shift was on an acceptable level.

Example 10 differs from Example 9 in that the ultraviolet absorber was not added to the former. The sample of Example 10 was comparable to that of Example 9 in point of the heat-shielding capability; however, in the light-resistant test, it yellowed more than the sample of Example 5. The reason may be because the cholesteric liquid-crystal phase light-reflective layer would be deteriorated and, in addition, the cyan dye would also be deteriorated. In addition, in Example 10, the color shift of the transmitted light in blue was relatively remarkable, and the use of the reflector of Example 10 would be limited.

Example 11 is an embodiment where the part of undercoat layer/PET film substrate/undercoat layer was peeled away in producing the laminated interlayer film sheet. In this, since the ITO fine particles-containing undercoat layer was removed, the heat-shielding capability of the sheet lowered in some degree, but was still good. In the light-resistant test, the sheet of Example 11 was comparable to that of Example 8 in point of the yellowing resistance and the color shift resistance of the transmitted light.

The above results confirm that, in Examples of the invention, infrared light reflecting plates excellent in light-shielding capability are obtained.

The results further confirm that, in case where an ultraviolet absorber is incorporated in the layer on the sunlight facing side in producing laminated glass, the light-resistant of the produced laminated glass is improved. The results still further confirm that the ultraviolet absorber-containing layer contributes toward improving, though to a small extent, the heat-shielding capability of the produced laminated glass.

Further, it is known that incorporating a colorant and fine particles of metal oxide into the reflector further improves the heat-shielding capability of the resulting reflector. In addition, it is known that the colorant-containing layer, if any, in the reflector could control the color of the transmitted light, therefore bettering the look of the rejector-incorporated articles.

## Claims

1. An IR-light reflecting laminate comprising at least four light-reflective layers $X_1$, $X_2$, $X_3$ and $X_4$ each of which is formed of a fixed cholesteric liquid-crystal phase, wherein

   - the reflection center wavelength ($\lambda_1$) of the layers $X_1$ and $X_2$ is the same and is in the range of 1,010-1,070 nm, and the two layers reflect circularly-polarized light in opposite directions, and
   - the reflection center wavelength ($\lambda_2$) of the layers $X_3$ and $X_4$ is the same and is in the range of 1,190-1,290 nm, the two layers reflect circularly-polarized light in opposite directions.

2. The IR-light reflecting laminate of claim 1, which further comprises a substrate.

3. The IR-light reflecting laminate of claim 1 or 2, wherein at least one of the layers $X_1$, $X_2$, $X_3$ and $X_4$ is formed by fixing a cholesteric liquid-crystal phase of a liquid-crystal composition applied on the surface of the underlying light-reflective layer.

4. The IR-light reflecting laminate of claim 2 or 3, wherein the substrate is a polymer film.

5. The IR-light reflecting laminate of any of claims 1-4, comprising an easy-adhesion layer on one or both surfaces thereof, preferably one easy-adhesion layer disposed on the surface of the substrate opposite to the side thereof where the at least four layers $X_1$, $X_2$, $X_3$ and $X_4$ are disposed.

6. The IR-light reflecting laminate of any of claims 2-5, further comprising an undercoating layer and/or an alignment layer between the substrate and at least one of the layers $X_1$, $X_2$, $X_3$ and $X_4$.

7. The IR-light reflecting laminate of any of claims 4-6, wherein at least one of the easy-adhesion layer, the undercoating layer, the alignment layer and the substrate comprises polyvinyl butyral.

8. The IR-light reflecting laminate of any of claims 1-7, wherein at least one of the at least four light-reflective layers and, where present, the easy-adhesion layer, the undercoating layer, the alignment layer and the substrate comprises

one or more of

- at least one UV-absorber;
- at least one colorant; and
- fine metal oxide particles which absorb and/or reflect light of 1,400-2,500 nm.

**9.** The IR-light reflecting laminate of claim 8, wherein the layer or the substrate comprising the at least one UV-absorber has a UV-transmittance of ≤ 0.1 % at a wavelength of ≤ 380 nm.

**10.** The IR-light reflecting laminate of any of claims 1-9, which further comprises at least one interlayer film sheet laminated on one or both outermost layer(s) thereof.

**11.** The IR-light reflecting laminate of claim 10, which further comprises a glass on each side thereof.

**12.** The IR-light reflecting laminate of claim 10 or 11, wherein at least one of the at least one interlayer film and the two glasses comprises at least one of an UV-absorber, a colorant and fine metal oxide particles which absorb and/or reflect light of 1,400-2,500 nm.

**13.** A method for producing the IR-light reflecting laminate of any of claims 10-12, which comprises the steps of

i) sticking a first interlayer film on one surface of the IR-light reflecting plate of any of claims 1-9,
ii) optionally and simultaneously with step (i), peeling away the substrate, and
iii) optionally sticking a second interlayer film sheet on the other surface of the IR-light reflecting plate.

**14.** A window member of building structures or vehicles, comprising an IR-light reflecting laminate of any of claims 1-12.

FIG. 1

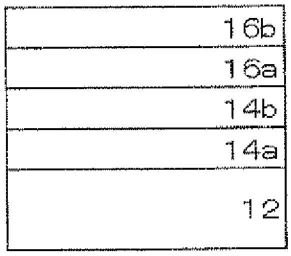


FIG. 2

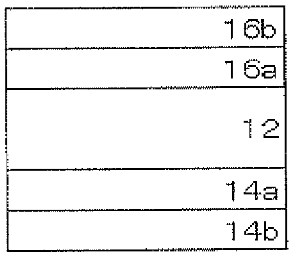


FIG. 3

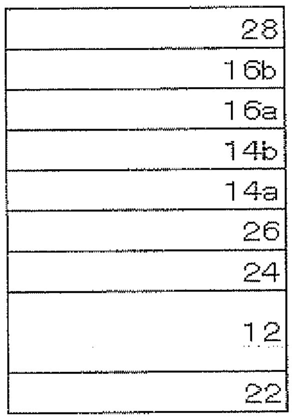

FIG. 4

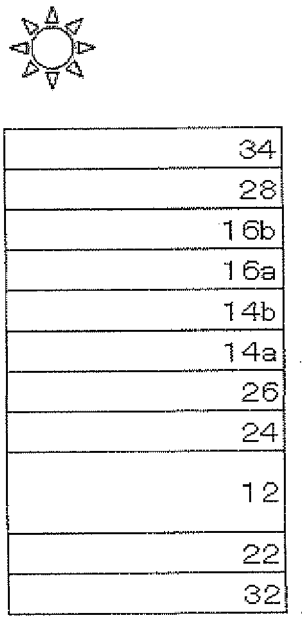
34
28
16b
16a
14b
14a
26
24
12
22
32

FIG. 5

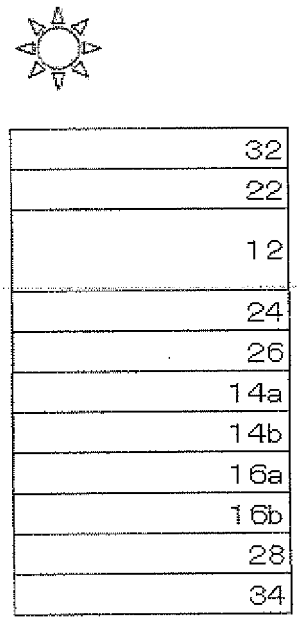
32
22
12
24
26
14a
14b
16a
16b
28
34

FIG. 6

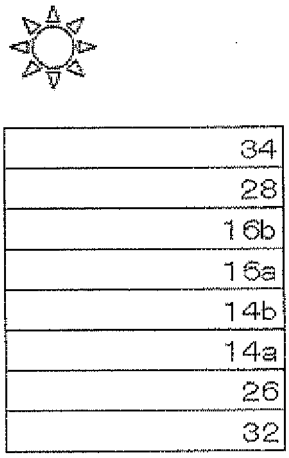


FIG. 7

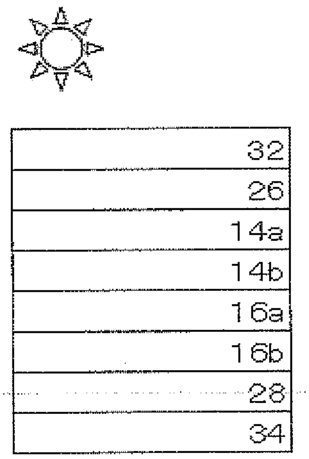

FIG. 8

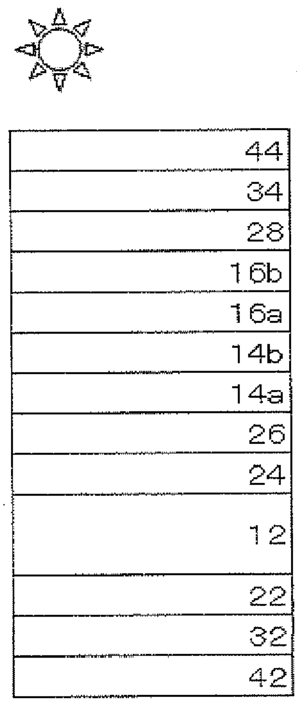
44
34
28
16b
16a
14b
14a
26
24
12
22
32
42

FIG. 9

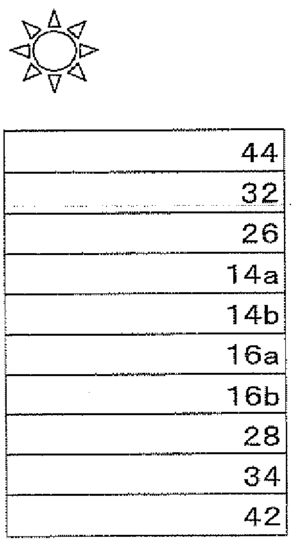
44
32
26
14a
14b
16a
16b
28
34
42

Fig. 10

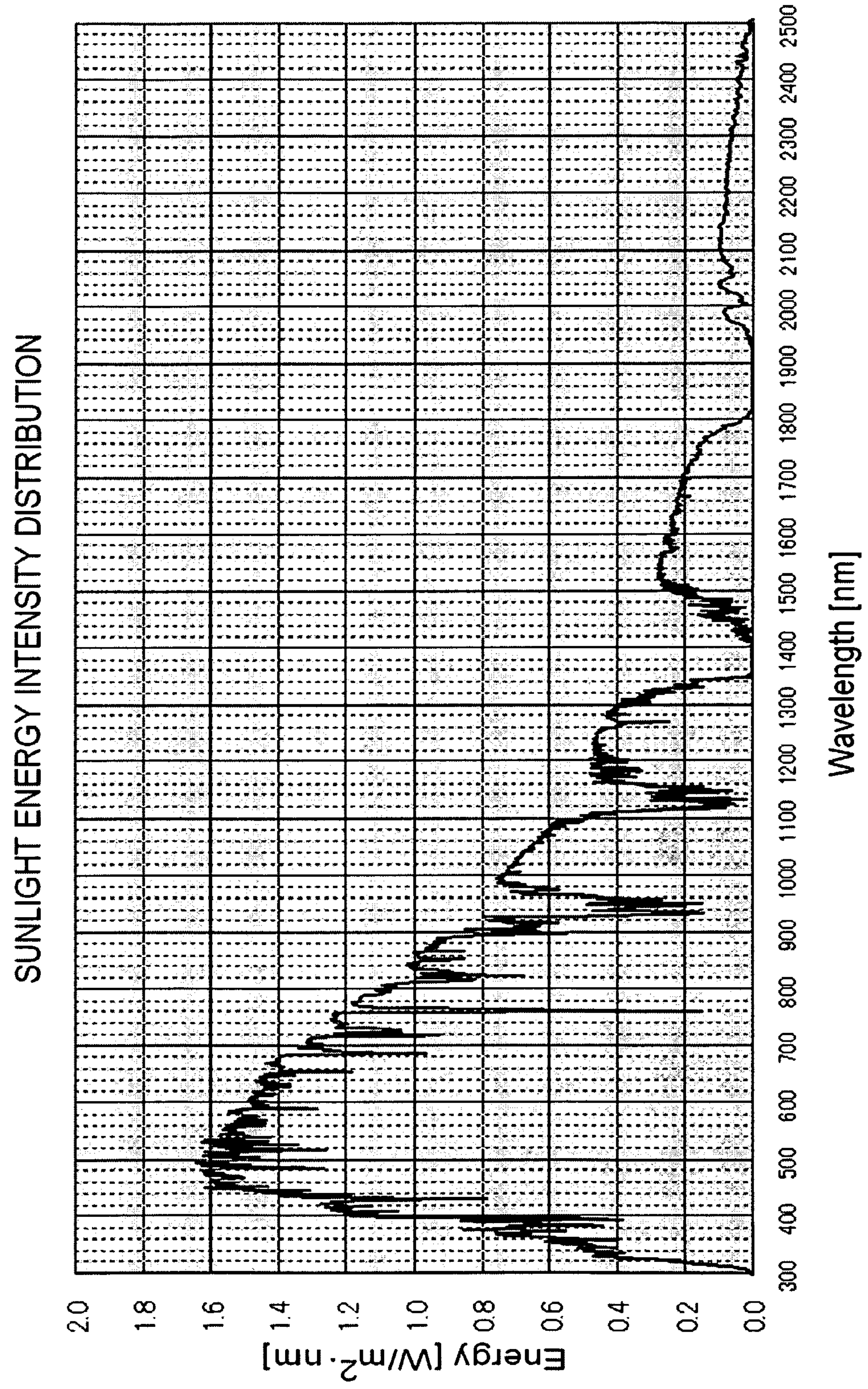
SUNLIGHT ENERGY INTENSITY DISTRIBUTION
Energy [W/m²·nm]
2.0
1.8
1.6
1.4
1.2
1.0
0.8
0.6
0.4
0.2
0.0
300
400
500
600
700
800
900
1000
1100
1200
1300
1400
1500
1600
1700
1800
1900
2000
2100
2200
2300
2400
2500
Wavelength [nm]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6263486 A
- JP 2002131531 A
- JP 6194517 A
- JP 4109914 B
- JP 2009514022 T
- JP 3500127 B
- JP 3745221 B
- JP 2008304762 A
- JP 4504555 T
- JP 2008545556 T
- US 4683327 A
- US 5622648 A
- US 5770107 A
- WO 9522586 A
- WO 95244 A
- WO 9700600 A
- WO 9823580 A
- WO 9852905 A
- JP 1272551 A
- JP 6016616 A
- JP 7110469 A
- JP 11080081 A
- JP 2001328973 A
- JP 2003287623 A
- US 2367661 A
- US 2367670 A
- US 2448828 A
- US 2722512 A
- US 3046127 A
- US 2951758 A
- US 3549367 A
- JP S60105667 B
- US 4239850 A
- US 4212970 A
- JP 2007272185 A
- JP 2005099248 A
- EP 860475 A
- JP 2005105175 A
- JP 2009067956 A


### Non-patent literature cited in the description


- **Y. GOTO.** *Mol. Cryst. Liq. Cryst.,* 1995, vol. 260, 23-28
- *Nlakromol.Chem.,* 1989, vol. 190, 2255
- *Advanced Materials,* 1993, vol. 5, 107
- Ekisho Debaisu Handobukku. Nikkan Kogyo Shimbun, Ltd, 1989, 199